# EUROPÄISCHE PATENTSCHRIFT

(11) **EP 3 352 580 B1**
(45) Veröffentlichungstag und Bekanntmachung des Hinweises auf die Patenterteilung: **08.05.2019**
(21) Anmeldenummer: 16760393.5
(22) Anmeldetag: 09.08.2016
(51) Int. Cl.: A23L 25/00, A23C 20/02

(54) **FRISCHKÄSEÄHNLICHES LEBENSMITTELPRODUKT SOWIE HERSTELLUNGSVERFAHREN**
CREAM CHEESE-LIKE FOOD PRODUCT AND PRODUCTION METHOD
PRODUIT ALIMENTAIRE DE TYPE FROMAGE FRAIS ET PROCÉDÉ DE PRODUCTION

(30) Priorität: 25.09.2015 DE 102015116249
(43) Veröffentlichungstag der Anmeldung: 01.08.2018
(73) Patentinhaber: Hochland SE, 88178 Heimenkirch (DE)
(72) Erfinder: HERRMANN, Dirk, 88279 Amtzell (DE); ROTHER, Matthias, 88239 Wangen i. A. (DE); MAHLER, Marie-Luise, 88161 Lindenberg (DE)
(74) Vertreter: Patentanwälte Behrmann Wagner PartG mbB
(86) Internationale Anmeldenummer: PCT/EP2016/068958
(87) Internationale Veröffentlichungsnummer: WO 2017/050480

(56) Entgegenhaltungen:
- DE-U1-202007 017 700
- US-A- 4 639 374
- US-A1- 2008 063 752

## Beschreibung

Die Erfindung betrifft ein Verfahren zum Herstellen von frischkäseähnlichen, bevorzugt veganen, Lebensmittelprodukten, insbesondere einer Partikelsuspension auf Basis von Nüssen und/oder Kernen, gemäß Anspruch 1. Ebenso betrifft die Erfindung ein frischkäseähnliches, insbesondere veganes Lebensmittelprodukt auf der Basis von Nüssen und/oder Kernen gemäß Anspruch 13.

Das Ernährungsverhalten befindet sich in einem ständigen Wandel. Zurzeit geht der Trend hin zu veganen Produkten, wie veganen Brotaufstrichen, die versuchen herkömmliche, nicht vegane Produkte, wie beispielsweise Frischkäse auf Milchbasis zu imitieren. Dies gelingt bisher in der Praxis bei auf dem Markt befindlichen Produkten, insbesondere veganen Brotaufstrichen auf Nuss und/oder Kernbasis nur mäßig. Zum einen unterscheiden sich die bekannten Ersatz-Produkte deutlich hinsichtlich des Mundgefühls von klassischem Frischkäse und werden je nach Produkt als rau oder grobkörnig empfunden. Darüber hinaus zeichnen sich die zur Zeit angebotenen veganen Brotaufstriche, beispielsweise auf Cashewbasis durch einen eher grauen Farbeindruck aus, der sich deutlich von einer typischerweise weißen Farbe sowie einem hohen Helligkeitswert L* in CIELAB-Farbraum unterscheidet, wie das bei klassischem Frischkäse gegeben ist.

Ein mögliches Verfahren zum Herstellen eines veganen Lebensmittelproduktes auf Kern oder Nussbasis ist beispielsweise in der EP 1 102 550 B1 beschrieben. Zum Herstellen des Lebensmittelproduktes werden Kerne oder Nüsse unter Zugabe von Wasser zu einer rührbaren, breiigen Substanz verarbeitet, zu der dann Öl hinzugegeben wird. Zu der aus der Ölzugabe resultierenden Substanz wird dann zur abschließenden Einstellung der Konsistenz Säure zugegeben.

Auch die DE 198 34 925 C5 beschreibt ein Verfahren zum Herstellen eines veganen Lebensmittelproduktes auf Basis von Kernen oder Nüssen, wobei gemäß der Lehre der Patentschrift eine rührbare Substanz aus der Zerkleinerung von Kernen oder Nüssen unter Zugabe von Wasser in einem gewissen Gewichtsverhältnis hergestellt wird, welcher Öl oder flüssig gemachtes Fett, wiederum in einem bestimmten Gewichtsverhältnis, zugegeben wird, wobei dann eine abschließende Säuerung zur Einstellung der Konsistenz erfolgt.

Ebenso beschäftigt sich die DE 20 2007 017 700 U1 mit der Herstellung von Frischkäseersatzprodukten, wobei die Druckschrift lehrt, körnerfrei zerkleinerte Cashew-Kerne unter Rühren mit Sojamilch in einem bestimmten Mengenverhältnis zu mischen, dann zu pasteurisieren, abzukühlen und durch Zugabe von Mikroorganismen zu säuern, wodurch eine Dickmilch ähnliche Substanz gewonnen wird. Aus dieser wird dann, wie bei der klassischen Käseherstellung eine Molke ähnliche Flüssigkeit abgetrennt und auf diese Weise eine Rohmasse mit gewünschter Konsistenz erhalten, wobei die Rohmasse durch Zugabe von Gewürzen und/oder Kräutern geschmacklich veredelt werden kann. Die Druckschrift beschreibt weiter, dass eine cremige Konsistenz durch das Verarbeiten der Rohmasse mit einer Quarkmühle erreicht werden kann.

Die GB 874 537 A beschreibt ein proteinhaltiges Lebensmittelprodukt auf Basis von Ölsaat, wobei zunächst das Pflanzenprotein von dem beinhalteten Öl getrennt wird. Dabei wird eine wässrige Lösung des pflanzlichen Proteins hergestellt, wobei der wässrigen Proteinlösung Fett zugegeben wird, bevor diese erhitzt wird. Gemäß dieser Lehre der Druckschrift entsteht durch das Erhitzen eine Art Bruch, der ähnlich wie klassischer Käsebruch verarbeitet werden kann.

Aus der DE 20 2011 002 097 U1 ist ebenfalls ein Frischkäseersatzprodukt auf Basis von Nüssen bekannt. Dabei werden Nüsse zunächst über mehrere Stunden in Wasser eingeweicht und danach zu Püree zermahlen, welches mit Wasser vermischt, erhitzt und danach wieder abgekühlt und mit Bakterienkulturen versetzt wird. Nach einer zehnstündigen Fermentation wird die Trockenmasse mit Wasser auf 33% eingestellt und das Produkt wird pasteurisiert.

Die US 4,639,374 A beschäftigt sich nicht mit frischkäseähnlichen Lebensmittelprodukten, sondern mit einer auf Basis von Mandeln, Zucker und Emulgatoren hergestellten Mandelpaste als Basis für Getränke, beispielsweise durch Mischen der Mandelpaste mit Milch oder zur Weiterverarbeitung zu einem Dessert. Im Rahmen des bekannten Verfahrens werden die Mandeln gemahlen, wobei die Verarbeitung unter Zugabe von Emulgatoren und großen Mengen von Zucker erfolgt, welcher gemäß der Lehre der Druckschrift wesentlich ist für den auf Walzen durchgeführten Zerkleinerungsvorgang. Die Druckschrift erwähnt in Beispiel 4 den Einsatz eines Homomixers und eines Homogenisators, wobei die Textur des Produktionsergebnisses nicht beschrieben ist. Nach Angaben in der Druckschrift bildet sich unterstützt durch die zugegebenen Emulgatoren eine Öl in Wasser Emulsion.

Die US 2011/0064862 A1 beschäftigt sich ebenfalls nicht mit frischkäseähnlichen Produkten, sondern mit der Herstellung einer Milch auf Nussbasis, wobei eine Nussbutter hierzu mit Wasser gemischt wird. Bei solchen milchähnlichen Produkten steht stärker die Stabilisierung der Produkte als der Strukturaufbau im Vordergrund, welcher sich deutlich von frischkäseähnlichen Produkten, die sich durch eine erhöhte Festigkeit auszeichnen, unterscheidet.

Die DE 10 2006 037 608 A1 beschreibt ein Verfahren zur Herstellung eines Brotaufstrichs. Die zum Einsatz kommenden Zutaten werden bereits in einem ersten Schritt unter Zugabe von Wasser allesamt gemeinsam zerkleinert. Gemäß der Lehre der Druckschrift werden die eingesetzten Ölsaaten bevorzugt bereits im Vorfeld eingeweicht. Im Ergebnis ist bei dem bekannten Verfahren, bei welchem nicht zunächst eine pastöse Masse hergestellt wird, die dann in einem separaten Schritt durch Zugabe von Wasser zu einer pumpfähigen Masse weiterverarbeitet wird, mit der Bildung großer Agglomerate/Partikel zu rechnen.

Die WO 2013/010037 A1 (EP 2731451 A1) ist eine alternative Methode zum Herstellen eines Käserersatzproduktes auf Basis von Mandeln, wobei die Druckschrift lehrt, Faserstoffe der Mandeln abzutrennen. Wesentliches Merkmal der bekannten Herstellungsmethode ist der Einsatz des vernetzenden Enzyms (Transglutaminase).

Aus der US 2008/063752 A1 ist ein Verfahren zur Herstellung von Joghurt, Trinkjoghurt sowie fermentierten Getränken, wie Mandelmilch bekannt. Auf eine Hochdruckhomogenisierung folgt ein Erhitzungsschritt.

Ausgehend von dem vorgenannten Stand der Technik, liegt der Erfindung die Aufgabe zugrunde, ein Verfahren zum Herstellen eines verbesserten Lebensmittelproduktes, konkret eines Frischkäsersatzproduktes, auf Basis von Nüssen und/oder Kernen herzustellen, welches hinsichtlich seines Mundgefühls dem von klassischem Frischkäse auf Milchbasis erzeugten Mundgefühl möglichst nahe kommt. Ganz besonders bevorzugt soll das Verfahren derart ausgebildet sein, dass das resultierende Lebensmittelprodukt auch eine einem klassischen Frischkäse nahe kommende Helligkeit L* im CIELAB-Farbraum und ganz besonders bevorzugt auch einen natürlich weißen Farbeindruck aufweist. Ferner besteht die Aufgabe darin, ein entsprechend verbessertes Lebensmittelprodukt, insbesondere als Frischkäseersatzprodukt anzugeben.

Diese Aufgabe wird hinsichtlich des Verfahrens mit den Merkmalen des Anspruchs 1 und hinsichtlich des Lebensmittelproduktes mit den Merkmalen des Anspruchs 13 gelöst. Vorteilhafte Weiterbildungen der Erfindung sind in den Unteransprüchen angegeben.

Zur Vermeidung von Wiederholungen sollen verfahrensgemäß offenbarte Merkmale auch als vorrichtungsgemäß offenbart gelten und beanspruchbar sein. Ebenso sollten vorrichtungsgemäß offenbarte Merkmale auch als verfahrensgemäß offenbart gelten und beanspruchbar sein.

Der Erfindung liegt zunächst die Erkenntnis zugrunde, dass sich auf dem Markt befindliche Frischkäseersatzprodukte auf Nuss oder Kernbasis im Hinblick auf den Aufbau ihrer Mikrostrukturebene deutlich von klassischem Frischkäse auf Milchbasis unterscheiden. Es wird vermutet, dass dieser Unterschied ursächlich ist für das unterschiedliche Mundgefühl von bekannten Frischkäseprodukten zu klassischem Frischkäse. Es wird auch vermutet, dass die von Frischkäse unterschiedliche Mikrostruktur verantwortlich ist für den eher grauen Farbeindruck, den bekannte Ersatz-produkte beim Konsumenten bewirken.

Eine mikroskopische Analyse von bekannten veganen Frischkäseersatzprodukten hat ergeben, dass deren Mikrostrukturebene im Gegensatz zu klassischem Frischkäse auf Milchbasis nicht von einer reinen Mikropartikelgelsuspension gebildet ist, bei der die Fettphase vollständig in Mikrogelpartikel eingebaut ist, wie dies bei klassischem Frischkäse der Fall ist, sondern bei mikroskopischer Analyse deutlich sichtbar eine separate Fettphase, bestehend aus Fetttropfenpartikel umfasst. Auf Basis dieser Erkenntnis wurde dann das erfindungsgemäße Verfahren entwickelt, welches so gestaltet ist, bei dem, insbesondere milchfreien, bevorzugt veganen, erfindungsgemäßen Lebensmittelprodukt Mikrostrukturen zu schaffen, die mit den Mikrostrukturen von klassischem Frischkäse vergleichbar sind, bei denen also die Fettphase zumindest weitestgehend, bevorzugt, zumindest näherungsweise, vollständig in Mikrogelpartikel eingebaut ist.

Neben einer hinreichenden Zerkleinerung der Fettpartikel und dem Einbau der Fettphase in die Mikrogelpartikel des Lebensmittelproduktes ist es gemäß der der Erfindung zugrundeliegenden Erkenntnis notwendig, das Verfahren so zu gestalten, dass eine Partikelgrößenverteilung des Lebensmittelproduktes bestimmte Rahmenbedingungen (Kennwerte) erfüllt und dabei bevorzugt einer typischen Partikelgrößenverteilungen von klassischen Frischkäsen auf Milchbasis möglichst nahe kommt. Dies vorausgeschickt, werden im Folgenden das erfindungsgemäße Verfahren sowie das erfindungsgemäße, bevorzugt frischkäseähnliche, ganz besonders bevorzugt vegane Lebensmittelprodukt erläutert.

Erfindungsgemäß ist zunächst vorgesehen, eine pastöse Masse aus zerkleinerten Nüssen und/oder Kernen bereitzustellen. In Weiterbildung der Erfindung kann diese pastöse Masse, wie später noch erläutert werden wird, vor dem Bereitstellen als Bestandteil des Verfahrens (selbst) hergestellt werden. Ganz besonders bevorzugt ist es, wenn die pastöse Masse aus hellen Nüssen und/oder hellen Kernen hergestellt wird bzw. ist, um auch einen ähnlich weißen Farbeindruck zu erhalten wie Frischkäse. Das erfindungsgemäße Verfahren hat dann, wie ebenfalls noch erläutert werden wird, insbesondere Einfluss auf die Helligkeit L* im CIELAB-Farbraum, welche bei erfindungsgemäßer bzw. konkreter Ausführung des Verfahrens (deutlich) erhöht wird. Ganz besonders geeignet erscheint hierfür die Herstellung der pastösen Masse aus Mandeln, ganz besonders bevorzugt ausschließlich aus Mandeln oder mit einem Mandelanteil von über 50 Gew-%, noch weiter bevorzugt über 80 Gew-%.

Zu der pastösen Masse wird dann zur Einstellung des Trockenmassegewichtsanteils Wasser zugegeben, so dass eine pumpfähige Masse erhalten wird, die einen Trockenmassegewichtsanteil von weniger als 80%, bevorzugt weniger als 60%, besonders bevorzugt von weniger als 40% aufweist.

Ein weiteres wesentliches Merkmal des erfindungsgemäßen Verfahrens besteht darin, dass dieses zum Gewinnen des erfindungsgemäßen Lebensmittelproduktes aus der pumpfähigen Masse mindestens einen Erhitzungsschritt (Erwärmungsschritt) und mindestens einen mechanischen Bearbeitungsschritt umfasst, die so gestaltet bzw. durchzuführen sind, dass das resultierende Lebensmittelprodukt hinsichtlich des Aufbaus seiner Mikrostrukturebene zumindest näherungsweise der Mikrostrukturebene von klassischem Frischkäse entspricht, dass also ein Großteil der Fettphase, vorzugsweise zumindest näherungsweise die gesamte Fettphase nicht separat, d.h. als eigenständige bei mikroskopischer Analyse sichtbare Phase vorliegt, sondern eingebaut ist in die Mikrogelpartikel des Lebensmittelsproduktes, dass also eine möglichst weitgehende bzw. reine Mikrogelpartikelsuspension vorliegt und zudem der mittlere Partikeldurchmesser x50,3 des nicht durch ein Lösungsmittel aufgeschlossenen, d.h. unveränderten Lebensmittelproduktes, gemessen in destilliertem Wasser, insbesondere mittels eines Laserbeugungsspektrometers, <100 µm, bevorzugt zwischen 10 µm und 40 µm, beträgt, was wiederum dem mittleren Partikeldurchmesser x50,3 klassischer Frischkäseprodukte entspricht. Ganz wesentlich ist dabei, dass die mechanische Bearbeitung so ausgeführt wird, dass ein ausreichend hoher Druck und/oder Scherkrafteintrag in die pumpenfähige Masse erfolgt, und die gewünschte Zerkleinerung sowie Homogenisierung und Einarbeitung der Fettphase in die Mikrogelpartikel sicherzustellen. Anders ausgedrückt liegt mindestens ein Peak, ganz besonders bevorzugt ein globales Maximum der Partkelgrößenverteilung eines erfindungsgemäßen Lebensmittelproduktes bei einem x3 Partikeldurchmesser der größer ist als 10 µm.

Die, bevorzugt wie zuvor beschrieben gemessene bzw. bestimmte Partikelgrößenverteilung des nicht aufgeschlossenen, d.h. unveränderten erfindungsgemäßen Lebensmittelproduktes weist bei ausreichender Erhitzung und ausreichender mechanischer Bearbeitung mindestens einen Peak (Maximum), ganz besonders bevorzugt ein globales Maximum, bei einem Partikeldurchmesser x3 >10 µm auf.

Als Nachweis dafür, dass die Fettphase im gewünschten Maß, bevorzugt zumindest weitgehend, weiter bevorzugt vollständig, nicht als freie Phase vorliegt, sondern erfindungsgemäß in die Mikrogelpartikel des Lebensmittelproduktes eingebaut ist, muss bei korrekter Erhitzung und mechanischer Bearbeitung eine weitere Bedingung erfüllt sein. Das Lebensmittelprodukt muss nämlich in einem teilaufgeschlossenen Zustand, welcher erhalten wird durch Mischen eines Gewichtsteils des (unveränderten) Lebensmittelproduktes mit neun Gewichtsteilen einer SDS-EDTA-Lösung (0,25% SDS; 0,25% EDTA) eine Partikelgrößenverteilung aufweisen, die sich von der Partikelgrößenverteilung des nicht aufgeschlossenen Lebensmittelproduktes (siehe oben) durch mindestens einen weiteren bzw. zusätzlichen Peak bei einem Partikeldurchmesser x3 <10 µm auszeichnet. Anders ausgedrückt ist im teilaufgeschlossenen Zustand in einem Partikelgrößenbereich <10 µm ein Peak zu beobachten, insbesondere ein lokales Maximum, der im nicht aufgeschlossenen Zustand nicht auftritt. Dieser zusätzliche Peak im teilaufgeschlossenen Zustand, wird nämlich erzeugt von Fett- oder Öltröpfchen der Fettphase des Lebensmittelproduktes, die durch die Zugabe der SDS-EDTA-Lösung aus den Mikrogelpartikeln herausgelöst wurden und somit als freie Phase vorliegen und damit die Partikelgrößenverteilung beeinflussen. Das Vorliegen des zusätzlichen Peaks in einem Partikelgrößenbereich von <10 µm belegt somit, dass der Erhitzungs- und mechanische Bearbeitungsschritt erfindungsgemäß bzw. korrekt durchgeführt wurde, dass also die pumpfähige Masse einer ausreichenden Erhitzung und einem ausreichenden mechanischen Stress, insbesondere einer Druck- und/oder Scherbeanspruchung ausgesetzt wurde, um die Fettphase, zumindest weitgehend in die Mikrogelpartikel einzubinden.

Zusätzlich zu dem vorerwähnten mechanischen Bearbeitungsschritt kann bei Bedarf noch (mindestens ein) weiterer mechanischer Bearbeitungsschritt, insbesondere vor dem vorerwähnten Bearbeitungsschritt, ganz besonders bevorzugt vor dem Erhitzungsschritt durchgeführt werden, insbesondere um Fetttropfen aufzubrechen und zu zerkleinern. Auch hier bietet sich eine Hochdruckhomogenisierung an, insbesondere jedoch nicht zwingend, mit einer gleich großen oder geringen Kraftbeaufschlagung der Masse, insbesondere also mit einem gleichgroßen oder kleineren Druck. Durch die Realisierung eines weiteren (vorherigen) mechanischen Bearbeitungsschrittes, insbesondere einer Hochdruckhomogenisierung kann die Kraftbeaufschlagung im (späteren bzw. eigentlichen) mechanischen Bearbeitungsschritt geringer ausfallen, als bei der zuvor beschriebenen Ausführung mit nur einem mechanischen Bearbeitungsschritt.

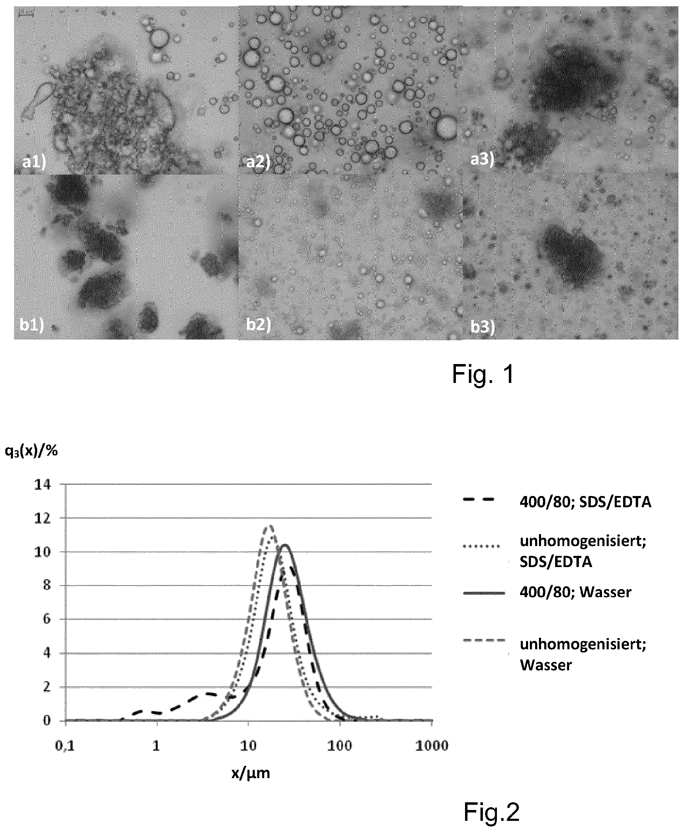

Die Auswirkungen des erfindungsgemäßen Verfahrens bzw. dessen Vorteilhaftigkeit sowie die Beschaffenheit der Mikrostruktur des erfindungsgemäßen, bevorzugt aus einem erfindungsgemäßen Verfahren resultierenden Lebensmittelproduktes im Vergleich zu einem Lebensmittelprodukt, bei dem auf die erfindungsgemäße mechanische Bearbeitung verzichtet wurde, ergeben sich aus den Darstellungen gemäß der Figuren 1 und 2.

So sind in Fig. 1 in sechs Bildern a1, a2, a3, b1, b2 und b3 unterschiedliche mikroskopische Aufnahmen gezeigt. Diese wurden bei 40-facher Vergrößerung unter einem Lichtmikroskop erstellt. Die Abbildung a1 zeigt die Aufnahme eines in destilliertem Wasser dispergierten, nicht künstlich aufgeschlossenen, d.h. unveränderten, Lebensmittelproduktes auf Mandelbasis, welches nach Stand der Technik ohne zusätzliche erfindungsgemäße mechanische Bearbeitung hergestellt wurde. Zu erkennen sind neben in der Bildmitte befindlichen Mikrogelpartikeln eine Vielzahl von freien, kugelförmigen Fetttropfen, die eine von den Mikrogelpartikeln separate Fettphase bilden.

Abbildung a2 zeigt das nicht erfindungsgemäße Lebensmittelprodukt im mit SDS-EDTA-Lösung teilaufgeschlossenen Zustand und Fetttropfen-Fokus, während Abbildung a3 das nicht erfindungsgemäße Lebensmittelprodukt ebenfalls im mit SDS-EDTA-Lösung teilaufgeschlossenen Zustand und Mikrogelpartikelfokus zeigt.

Hiervon unterscheidet sich deutlich das erfindungsgemäße Lebensmittelprodukt.

Abbildung b1 zeigt ein erfindungsgemäßes Lebensmittelprodukt, welches während der Herstellung auf über 65°C erhitzt und zudem mechanisch bearbeitet wurde, vorliegend durch eine, beispielhaft zweistufige, Hochdruckhomogenisierung, bei der die erhitzte pumpfähige Masse durch eine erste Düse (bevorzugt eine, beispielsweise ringförmige, Spaltdüse) gegen eine Prallfläche mit 400bar und 80bar Gegendruck gefördert wurde und dann durch eine zweite Düse (bevorzugt eine, beispielsweise ringförmige, Spaltdüse) gegen eine weitere Prallfläche mit 80bar. Das zugrundeliegende Lebensmittelprodukt wurde rein auf Mandelbasis, d.h. ohne sonstige Kerne sowie ohne Nusszusatz hergestellt. Zu erkennen ist, dass im nicht aufgeschlossenen, d.h. unveränderten Zustand (dispergiert in Wasser) gemäß Abbildung a1 im Wesentlichen keine freien Fetttröpfchen zu erkennen sind. Dies ändert sich durch Aufschließen durch Zusatz von SDS/EDTA-Lösung, wie aus den Abbildungen b2 und b3 ersichtlich ist, wobei Abbildung B2 mit Fetttröpfchenfokus und Abbildung b3 mit Mikrogelpartikelfokus aufgenommen wurde. Dies bedeutet, dass das erfindungsgemäße Lebensmittelprodukt zwar einen erheblichen Fettanteil aufweist, dieser jedoch im Wesentlichen nicht als freie Phase vorliegt, sondern in die Mikrogelpartikel eingelagert ist, was durch die erfindungsgemäße Verfahrensweise, insbesondere eine entsprechende Erhitzung und mechanische Bearbeitung erreicht wurde, und zum Sichtbarmachen erst aus diesen heraus gelöst werden muss.

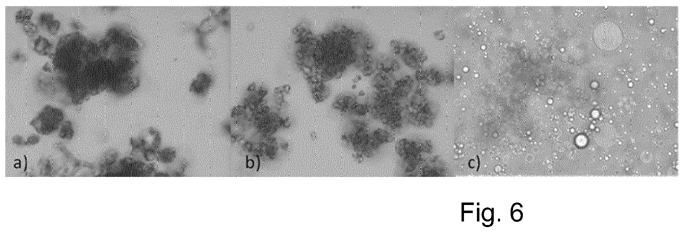

In Fig. 6 sind die lichtmikroskopischen Aufnahmen, bei 40-facher Vergrößerung von 3 in Wasser verdünnten Lebensmittelprodukten dargstellt. Bei Fig. 6 a handelt es sich um ein erfindungsgemäß hergestelltes Lebensmittelprodukt auf Mandelbasis, wobei die mechanische Bearbeitung als zweistufiger Homogenisierschritt bei 200 bar/40 bar ausgeführt wurde. Bei Fig. 6 b handelt es sich um ein marktübliches Doppelrahm-Frischkäseprodukt auf Milchbasis. In beiden mikroskopischen Aufnahmen ist zu erkennen, dass es sich um Mikrogel-Partikelsuspensionen ähnlicher Größenordnung im Wesentlichen ohne freie Fetttropfenphase handelt. Abweichend hierzu ist in Fig. 6 c ein marktübliches Muster auf Cashew-Basis mit Fokus auf freie Fetttropfen dargestellt, die offensichtlich nicht vollständig in die Partikel des Lebensmittelproduktes eingebunden sind. Es handelt sich damit bei diesem marktüblichen Muster auch nicht um eine reine MikrogelPartikelsuspension.

In dem Partikelgrößenverteilungsdiagramm Fig. 2 (Dichte- bzw. Häufigkeitsverteilungsdiagramm), welches eine halblogarithmische Achsenaufteilung aufweist, sind vier unterschiedliche Partikelgrößenverteilungen gezeigt. Bei der Kurve "unhomogenisiert, Wasser" handelt es sich um die Partikelgrößenverteilung eines Stand-der-Technik-Lebensmittelproduktes gemäß Abbildung a1 der Fig. 1, wobei "unhomogenisiert" hier bedeutet, dass in Kombination keine erfindungsgemäße Erhitzung und mechanische Bearbeitung stattgefunden hat. Zu erkennen ist eine näherungsweise ideale Glockenkurve, ohne Peak in einem Partikelgrößenbereich x3 <10 µm.

Ein solcher Peak fehlt auch bei der Kurve "unhomogenisiert, SDS/EDTA", zu deren Ermittelung das vorgenannte Lebensmittelprodukt mit SDS/EDTA-Lösung versetzt wurde, wie dies in den Abbildungen a2 und a3 gemäß Fig. 1 gezeigt ist. Da die aufgeschlossenen Fettkugeln in einem Größenbereich der Mikrogelpartikel zu finden sind, tauchen diese bei dieser Partikelgrößenverteilung nicht als separater Peak bei einer Partikelgröße x3 <10 µm auf.

Bei der Partikelgrößenverteilung "400/80, Wasser" handelt es sich um die Partikelgrößenverteilung eines nach dem Konzept der Erfindung ausgebildeten Lebensmittelproduktes, welches beispielsweise in Abbildung b1 gemäß Fig. 1 gezeigt ist. Hier hat so eine Erhitzung und mechanische Bearbeitung stattgefunden, die dazu führt, dass im Wesentlichen keine freie Fettphase existiert - auch diese Partikelgrößenverteilungskurve zeigt keinen Peak bei einer Partikelgröße x3 <10 µm. Zu erkennen ist ein Peak, hier ein globales Maximum bei einer Partikelgröße von x3 von etwa 15 µm.

Wird dieses erfindungsgemäße Lebensmittelprodukt teilaufgeschlossen durch Zugabe von SDS/EDTA resultiert die Partikelgrößenverteilung "400/80; SDS/EDTA". Hier ist ein verglichen mit der nicht aufgeschlossenen Partikelgrößenverteilung "400/80; Wasser" zusätzlicher Peak (lokales Maximum) bei einer Partikelgröße von etwa 3 µm zu beobachten, wodurch die Anwendung des erfindungsgemäßen Verfahren, insbesondere die korrekte Ausführung des Erwärmungs- und mechanische Bearbeitungsschrittes nachgewiesen ist. Die Größe und Position auf der X-Achse des Peaks (globales Maximum) bei der x3-Partikelgröße >10 µm ist kaum verändert.

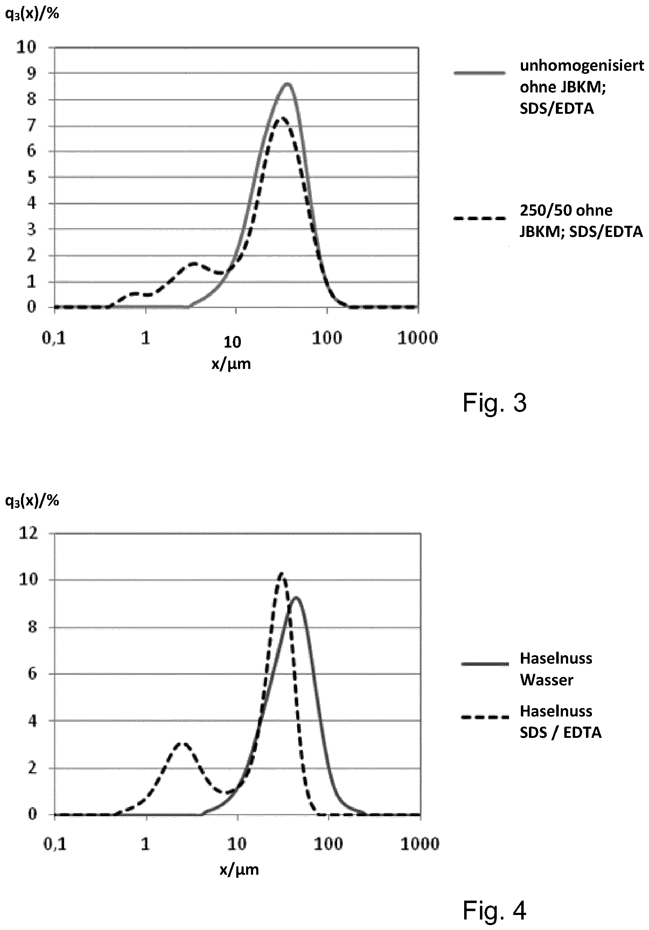

Lediglich ergänzend und der Vollständigkeit halber sei darauf hingewiesen, dass der Effekt der Feststellung eines zusätzlichen Peaks bei einer Partikelgröße <10 µm im teilaufgeschlossenen Zustand im Vergleich zum nicht aufgeschlossenen Zustand ausschließlich auf die erfindungsgemäße Ausführung des Erhitzungs- und mechanischen Bearbeitungsschrittes zurückzuführen ist und nicht auf den Einsatz eines fakultativen Verdickungsmittels, wie Johannisbrotkernmehl durch das grundsätzlich die Stabilisierung kleiner Tropfen begünstigt wird. So wurde bei einem Versuchsansatz, dessen Partikelgrößenverteilung "250/50 ohne JBKM; SDS/EDTA" im teilaufgeschlossenen Zustand dargestellt ist verglichen mit der Partikelgrößenverteilung einer teilaufgeschlossenen Probe eines Lebensmittelproduktes, welches nicht erfindungsgemäß erhitzt und mechanisch bearbeitet wurde, wobei hier auf den Einsatz von Johannisbrotkernmehl verzichtet wurde. Diese Partikelgrößenverteilung ist in Fig. 3 mit "unhomogenisiert ohne JBKM; SDS/EDTA" bezeichnet. Es bestätigt sich auch hier die Notwendigkeit einer erfindungsgemäßen Erhitzung und mechanischen Bearbeitung entsprechender Intensität zur Erzeugung einer kleinvolumigen Fetttropfenfraktion, die als separater Peak im Partikelgrößenbereich <10 µm der Partikelgrößenverteilung dargestellt ist.

In Fig. 4 sind die Partikelgrößenverteilungen eines alternativen, erfindungsgemäßen Lebensmittelproduktes auf Basis von Mandeln und Haselnüssen gezeigt. Zu erkennen ist auch hier, dass im teilaufgeschlossenen Zustand "Haselnuss SDS/EDTA" verglichen mit dem nicht aufgeschlossenen Zustand "Haselnuss-Wasser" ein zusätzlicher Peak bei <10 µm, konkret bei etwa 2 µm zu beobachten ist. Dieser resultiert aus der Kombination Erhitzung und mechanischer Bearbeitung.

Der Nachweis der Fetttropfenfraktion dient somit als analytischer Nachweis eines erfindungsgemäß durchgeführten Erhitzungs- und mechanischen Bearbeitungsschrittes.

Grundsätzlich ist es bevorzugt, insbesondere dann, wenn ein veganes Lebensmittelprodukt hergestellt werden soll, im Rahmen das verfahren ausschließliche pflanzliche Fette und/oder Öle einzusetzen, wobei alternativ auch der Einsatz tierische Fette und/oder Öle möglich ist, insbesondere dann, wenn es auf die vegane Eigenschaft nicht ankommt.

Zum besseren Verständnis der Erfindung werden im Folgenden verwendete Begriffe und bevorzugte Analyse- bzw. Messwertverfahren definiert:
Bei den Partikelgrößenverteilungen handelt es sich um mittels eines Laserbeugungsspektrometers erhaltenen Partikelgrößenverteilungen, also um halblogarithmische Dichteverteilungen eines volumenspezifischen Äquivalentsdurchmessers x3 in einem, beispielhaft in Fig. 2 gezeigten, Partikelgrößenverteilungsdiagramm (halblogarithmische Dichteverteilungskurve), bei welchem auf der Abszissenachse (X-Achse) der volumenspezifische Äquivalenzdurchmesser x3 und auf der Ordinatenachse (Y-Achse) die prozentuale Häufigkeit (Partikelgrößenverteilungsdichte) der Partikel aufgetragen wird. Unter Partikeln sind dabei sämtliche mit einem Laserbeugungspektrometer erfassbare Einheiten zu verstehen, d.h. sowohl Feststoffe, Agglomerate, als auch Tröpfchen, wie Fetttropfchen. Sämtliche in der Anmeldung behandelten und beanspruchten Partikelgrößenverteilungen wurden mit einem Laserbeugungsspektrometer LA-960 von Retsch Technology GmbH, Deutschland ermittelt, wobei der Berechnung immer ein Brechungsindex von 1,33 zugrundegelegt wurde. Die Messung der Partikelgrößenverteilung des nicht aufgeschlossenen, d.h. unveränderten Lebensmittelproduktes erfolgt durch Dispersion des Lebensmittelproduktes in destilliertem Wasser. Hierzu wurden die Proben unverdünnt in die mit destilliertem Wasser gefüllte Messzelle gegeben und es wurde viermal gemessen, wobei durch ein Umpumpen in der Messzelle Partikelagglomerate aufgebrochen wurden, bis sich ein stabiler Messwert einstellt. Die ersten drei Messungen dienen dem Nachweis, dass sich ein stabiler Messwert eingestellt hat. Für die Bestimmung der Partikelgrößenverteilung wird die vierte Messung herangezogen.

Um das Lebensmittelprodukt (zum Nachweis der Fettpartikel bzw. zum Befreien/Lösen der Fettpartikel) aus den Mikrogelpartikeln zu erreichen, wird ein Gewichtsanteil Lebensmittelproduktprobe, insbesondere 10g und 9 Gewichtsanteile SDS-EDTA-Lösung (0,25% SDS; 0,25% EDTA), insbesondere 90g dieser Lösung mit einem Magnetrührer bei 200 U/min bei Raumtemperatur für 30 min aufgeschlossen. Durch den Teilaufschluss lösen sich die vormals eingebundenen Fetttropfen aus den Mikrogelpartikeln und werden durch SDS stabilisiert. Bei SDS handelt es sich um Natriumdeodecylsulfat, also ein anionischen Tensid und bei EDTA um Ethylendiamintetraessigsäure.

Bei der Behandlung mit SDS/EDTA-Lösung muss von einem Teilaufschluss gesprochen werden, da es bei der angewandten Methode nicht zu einem vollständigen Aufschluss kommt und neben den freigesetzten Fetttropfen auch Partikel in der Messsuspension verbleiben. Die so hergestellte Messsuspension wird zur Messung in die mit destilliertem Wasser gefüllte Messzelle gegeben. Auch hier wird zur Bestimmung der Partikelgrößenverteilung mittels eines zuvor beschriebenen Laserbeugungsspektrometers bevorzugt viermal gemessen, wobei die kleinste gemessene Partikelgrößenverteilung zur Interpretation verwendet wird.

Im Folgenden werden die im Rahmen der Anmeldung herangezogenen Kennwerte der Partikelgrößenverteilungen erläutert.

x50,3 ist ein charakteristischer Kennwert für volumenbezogene Partikelgrößenverteilung. Diese wird in µm angegeben und bedeutet, dass 50% des gesamten Partikelvolumens aus Partikeln besteht, die kleiner sind als die mittlere Partikelgröße x50,3. Der Kennwert X50,3 gibt somit einen Hinweis auf die mittlere Partikelgröße und wird als solche bezeichnet.

Analog sagt der Kennwert x10,3, dass 10% des gesamten Partikelvolumens aus Partikel besteht, die kleiner sind als die Partikelgröße x10,3. Diese gibt somit einen Hinweis auf die typische Größe kleiner Partikel.

Ebenfalls analog besagt der Kennwert x90,3, dass 90% des gesamten Partikelvolumens aus Partikeln besteht, die kleiner sind als die Partikelgröße x90,3. Dieser Kennwert gibt somit einen Kennwert auf die typische Größe größerer Partikel.

Allgemein handelt es sich bei der Angabe x3 um einen volumenspezifischen Partikeläquivalenzdurchmesser.

q3 (x) bezeichnet die prozentuale Häufigkeit, d.h. die Partikelgrößenverteilungsdichte.

Für die im Rahmen dieser Patentanmeldung durchgeführten mikroskopischen Analyse wurde jeweils 1g nicht aufgeschlossener Probe in einem Laborröhrchen mit 9g Ringerlösung vermischt und über einen Laborröhrchenschüttler fein dispergiert. Die so hergestellte Dispersion wurde auf einen Objektträger aufgebracht und bei 40-facher Vergrößerung unter einem Lichtmikroskop analysiert.

Für die Analyse von teilaufgeschlossenen Proben wurde die teilaufgeschlossene Dispersion auf einen Objektträger aufgebracht, und bei 40-facher Vergrößerung unter einem Lichtmikroskop analysiert.

Festigkeitsmessung zur Bestimmung der Festigkeit wurden mittels einer Texturprüfmaschine (zwicki Z 5.0 TN, Zwick GmbH & Co. KG, Deutschland) durchgeführt. Für die Messungen wurden die Proben über 12 Stunden auf 10°C temperiert und erst unmittelbar vor der Messung aus der Kühlung genommen. Ein runder Prüfstempel mit einer Fläche von 1,27 cm2 dringt zur Messung mit einer Geschwindigkeit von 2 mm/Sek. 10 mm in die Probe.

Als Messwert der Festigkeit wird die maximale Kraftaufnahme des Messaufnehmers angegeben.

Für rheologische Messungen wurde ein Rotationsviskosimeter (Rheomat R180, ProRheo, Deutschland) verwendet. Gemessen wurde mit einem 14 mm Messkörper (Messkörper 3, ProRheo, Deutschland) in einem Probengefäß mit 55 mm Durchmesser. Die Messung wird bei einer eingestellten Drehzahl von 50 1/min durchgeführt (Messprogramm 3, Messkörper 3 ohne Messröhre). Über die Dauer von 4 min werden insgesamt 20 Messpunkte aufgezeichnet. Alle Proben wurden bei 10 °C ± 2 °C vermessen.

Zur sensorischen Charakterisierung der Textureigenschaft rau-bremsend wurde ein Sensorik-Panel gemäß DIN 10957 eingesetzt, wobei als Referenzprodukt für die Eigenschaft rau-bremsend ein Magerquark mit 20% Fett in der Trockenmasse herangezogen wurde.

Farb- und Helligkeitsmessungen wurden im CIELAB-Farbraum gemäß EN ISO 11664-4:2011 durchgeführt. Eingesetzt wurde hierzu: Farbspektrometer Dr. Lange spectro-color Typ LMG 183. Dabei handelt es sich bei den Werten L*, a* und b* um die in der DIN-Norm definierten kartesischen Koordinaten des Farbraums. Die L*-Achse beschreibt dabei Helligkeit (Luminanz) der Farbe mit Werten von 0 bis 100. Die L*-Achse wird auch als neutrale Grauachse bezeichnet, denn zwischen den Endpunkten schwarz (L* = 0) und weiß (L* = 100) sind alle unbunten Farben (Grautöne) enthalten. Die a*-Achse beschreibt den Grün- oder Rotanteil einer Farbe, wobei negative Werte für grün und positive Werte für rot stehen. Die b*-Achse beschreibt den Blau- oder Gelbanteil einer Farbe, wobei negative Werte für blau und positive Werte für gelb stehen.

Das erfindungsgemäße Lebensmittelprodukt ist, wie erläutert, im Hinblick auf seine Mikrostrukturierung einem klassischen Frischkäse sehr ähnlich, was sich insbesondere auch auf die sensorischen Eigenschaften, insbesondere das Mundgefühl des erfindungsgemäßen Lebensmittelproduktes niederschlägt. So ist das Leit-Attribut der klassischen Frischkäsetypik der Texturbegriff raubremsend. Analog zum klassischem Frischkäse liegt die Bewertung dieses Sensorikmerkmals, welche wie oben erläutert durchzuführen ist unter Verwendung eines Magerquarks mit 20Gew.-% Fett in der Trockenmasse oberhalb von 2,5 und bevorzugt in einem Bereich zwischen 3 und 7,5. Ein erfindungsgemäßes Lebensmittelprodukt bzw. das Verfahrensergebnis des erfindungsgemäßen Verfahrens entspricht bevorzugt auch für die weiteren Texturattribute einer glatten Maße (Referenz kalte Butter), schnellschmelzend (Referenz kalter Schmand - minimale Bearbeitung) sowie weich (Referenz kalter Schmand gerührt) den Bewertungen von klassischem Frischkäse. Bevorzugt liegen auch hier die Bewertungen in den für rau-bremsend angegebenen Wertebereichen, wobei auch die weiteren sensorischen Analysen gemäß DIN 10957 durchgeführt werden.

Der Verfahrensschritt der Erhitzung wird besonders bevorzugt vor der mechanischen Bearbeitung durchgeführt, wobei es zweckmäßig ist, wenn die pumpfähige Masse noch im erhitzten Zustand mechanisch bearbeitet wird. Grundsätzlich ist es jedoch möglich, den Erhitzungsschritt vor und/oder während der mechanischen Bearbeitung durchzuführen. Auch ist es möglich, den Erhitzungsschritt ausschließlich vor oder ausschließlich während oder ausschließlich nach der mechanischen Bearbeitung durchzuführen. Erfindungsgemäß wird der Erhitzungsschritt vor und/ oder während der mechanischen Belastung durchgeführt. Wie später noch erläutert werden wird ist es bevorzugt, wenn der Erhitzungsschritt die Bedingungen einer Pasteurisation erfüllt, also so durchgeführt wird, dass die Temperatur, auf die erhitzt wurde ausreichend lange gehalten wird, um ein bestimmtes Keimzahlergebnis, vorzugsweise von maximal 1000 Keimen/g Lebensmittelprodukt zu erzielen.

Im Hinblick auf die Temperaturwahl des Erhitzungsschrittes gibt es unterschiedliche Möglichkeiten. Wesentlich ist, dass die gewünschte Mikrostruktur (in Kombination mit der mechanischen Bearbeitung) erhalten wird. Erfindungsgemäß ist vorgesehen, dass eine Erhitzung auf eine Temperatur aus einem Temperaturbereich zwischen 65°C und 140°C, besonders bevorzugt auf eine Temperatur aus einem Temperaturbereich zwischen 75°C und 79°C erfolgt. Als Maß für einen ausreichenden Erhitzungsschritt kann auch ein im Zusammenhang mit der Erhitzung stehender Viskositätsanstieg herangezogen werden, also ein Vergleich der Viskosität der Masse vor und nach der Erhitzung. Bevorzugt wird die Erhitzung so ausgeführt, dass es durch den Erhitzungsschritt zu einem Viskositätsanstieg um mindestens 100%, bevorzugt um mindestens 300% kommt. Bevorzugt werden die Erhitzung und die mechanische Bearbeitung zusammen oder nacheinander so durchgeführt, dass es insgesamt durch den Erhitzungs- und mechanischen Bearbeitungsschritt zu einem Viskositätsanstieg von mindestens 250%, bevorzugt mindestens 500%, ganz besonders bevorzugt über 600% oder über 700% kommt.

Die Erhitzung erfolgt bevorzugt in einem Koch-Mischer, beispielsweise einer Stephan-Universalmaschine vom Typ UMC oder in einem Karl-Schnell-Prozess-Automat. Alternative Erhitzungsmöglichkeiten sind ebenfalls realisierbar. Ganz besonders bevorzugt erfolgt auch die Herstellung der pumpfähigen Masse durch Zugabe von Wasser zur pastösen Masse in einer solchen Vorrichtung.

Es hat sich überraschend herausgestellt, dass durch die Angleichung der Mikrostruktur des erfindungsgemäßen Lebensmittelproduktes an die Mikrostruktur eines klassischen Frischkäses ein Frischkäse nicht nur hinsichtlich seiner Textureigenschaften gut simuliert bzw. nachgebildet werden kann sondern auch hinsichtlich seiner Helligkeit sowie Farbe, d.h. hinsichtlich der Koordinaten im CIELAB-Farbraum. Bevorzugt resultiert nämlich aus einem erfindungsgemäßen Erhitzungs- und/oder mechanischen Bearbeitungsschritt eine deutliche bzw. messbare Erhöhung der Helligkeit, d.h. der Basiskoordinate L* im CIELAB-Farbraum um einen Betrag von mindestens 5, vorzugsweise um einen Betrag aus einem Wertebereich zwischen 5 und 25. Hierdurch wird ein frischer bzw. gesunder optischer Eindruck des erfindungsgemäßen Lebensmittelproduktes erhalten bzw. sichergestellt, insbesondere dann, wenn die Basiskoordinate L* einen Wert von mindestens 78, vorzugsweise mindestens 80, ganz besonders bevorzugt aus einem Wertebereich zwischen 80 und 95 oder mehr aufweist. Grundsätzlich wurde festgestellt, dass die besonders hohen Helligkeitswerte dann vergleichsweise einfach erreicht werden können, wenn die Nüsse und/oder Kerne, beispielsweise ausschließlich Mandeln entsprechend ausgewählt werden. Auf eine entsprechende Auswahl der Nüsse und/oder Mandeln kommt es insbesondere im Hinblick auf die Einstellung der weiteren Koordinaten a* und b* im CIELAB-Farbraum an, da diese durch das erfindungsgemäße Verfahren weniger stark beeinflussbar sind als die Helligkeit L*. Um einen ganz besonders bevorzugten, möglichst weißen Farbton zu erzielen, beträgt beim erfindungsgemäßen Lebensmittelprodukt der Wert a* bevorzugt zwischen -3 und +1 und/oder der Wert b* zwischen -1 und +9. Ein solcher (sehr) weißer bzw. natürlicher Frischkäseeindruck kann insbesondere durch die Wahl von vergleichsweise hellen Nüssen und/oder Kernen erreicht werden, beispielsweise indem das Lebensmittelprodukt, insbesondere ausschließlich, zumindest analog, auf Basis von Cashewkernen und/oder ganz besonders bevorzugt von, insbesondere blanchierten, Mandeln hergestellt wird. Unter Blanchieren wird das Entfernen der dunklen Samenhaut vom hellen Mandelkern verstanden.

Grundsätzlich ist es vorteilhaft, bei den eingesetzten Nüssen und/oder Kernen eine etwaige dunkle Samenhaut zur Herstellung der pastösen Masse, bevorzugt durch Blanchieren zu entfernen. Anders ausgedrückt enthält die pastöse Masse bevorzugt nicht etwaige dunkle Samenhäute der Nüsse und/oder Kerne, wodurch ein besonders helles, gleichförmiges Produkt erhalten werden kann.

In Weiterbildung der Erfindung ist mit Vorteil vorgesehen, dass die bereitgestellte pastöse Masse (ausschließlich) aus zerkleinerten Nüssen und/oder Mandeln besteht. Die pastöse Masse wird, wie eingangs erläutert, bevorzugt vor dem Bereitstellen in einem separaten Schritt als verfahrensgemäße Weiterbildung (selbst) erzeugt. Bevorzugt wird bzw. wurde die pastöse Masse ohne Wasserzugabe und/oder ohne Salzzugabe, und/oder ohne Zuckerzugabe und/oder ohne Zugabe eines Emulgators ganz besonders bevorzugt ohne weitere Zutaten außer Nüssen und/oder Mandeln hergestellt. Zur Gewinnung der pastösen Masse, insbesondere aus Nüssen und/oder Kernen eignen sich beispielsweise Schlagmessermühlen und/oder Kugelmühlen. Die pastöse Masse kann auch als Mus bezeichnet werden, beispielsweise für den bevorzugten Einsatz von ausschließlich oder größtenteils Mandeln als Mandelmus.

Wie eingangs erläutert ist ein wesentlicher Schritt des erfindungsgemäßen Verfahrens zur Erlangung des erfindungsgemäßen Lebensmittelproduktes die mechanische Bearbeitung der erhitzten oder (noch nicht) erhitzten pumpfähigen Masse, also die Realisierung eines im weitesten Sinne intensiven Homogenisierungsschrittes der hauptverantwortlich ist für die gewünschte Mikrostrukturierung. Insbesondere soll die mechanische Bearbeitung so ausgeführt werden, dass eine hohe mechanische Beanspruchung, insbesondere Druck- und/oder Scherkraftbeanspruchung der Partikel erfolgt. Besonders gute Erfahrungen wurden gemacht bei einer Ausführungsvariante des Verfahrens, bei der die mechanische Bearbeitung einen Hochdruckhomogenisierschritt umfasst, beispielsweise eine einstufige oder mehrstufige, insbesondere zweistufige Hochdruckhomogenisierung, wie diese beispielsweise zur Homogenisierung von Frischmilch eingesetzt wird. Unter Hochdruckhomogenisierung wird dabei das Fördern der pumpfähigen Masse durch eine Düse, beispielsweise Spaltdüse bei hohen Drücken, insbesondere zwischen 25 bar und 600 bar, ganz besonders bevorzugt zwischen 100 bar und 400 bar verstanden, wobei der Druckstrahl auf eine Prallfläche, beispielsweise einen Prallring trifft. Eine solche Hochdruckhomogenisierung kann einstufig erfolgen, dass also der gesamte Druckabbau mittels einer Düse bzw. in einem Homogenisierschritt erfolgt oder alternativ mehrstufig, insbesondere derart, dass ein stufenweiser Abbau eines Anfangsdrucks schlussendlich dann bis insbesondere auf Atmosphärendruck erfolgt. Lediglich beispielhaft kann für den mechanischen Bearbeitungsschritt eine zweistufige Hochdruckhomogenisiervorrichtung der Firma HST-Maschinenbau GmbH mit der Bezeichnung HL2.5-550K eingesetzt werden.

Wie erläutert, ist die mechanische Bearbeitung jedoch ausdrücklich nicht auf eine Hochdruckhomogenisierung beschränkt. Andere mechanische Bearbeitungsmethoden, wie beispielsweise mit einem in der EP 2 052 772 B1 beschriebenen Dissolver oder geeignete Rotor-Stator-Systeme wie z.B. Scherpumpen, andere Pumpe-Düse-Systeme, Systeme in denen das Produkt Kavitation ausgesetzt ist, oder Systeme in denen das Produkt unter Druck einer spontanen Entspannung ausgesetzt ist sind zusätzlich oder alternativ einsetzbar.

Besonders bevorzugt ist es, wenn der pH-Wert des Lebensmittels auf einen Wert <5,5, bevorzugt aus einem Wertebereich zwischen 4 und 5,4 eingestellt wird. Die Einstellung des pH-Wertes dient in erster Linie der Verbesserung der Haltbarkeit sowie einer positiven Beeinflussung der Proteindenaturierung und -quellung zur verbesserten Simulation der Eigenschaften eines klassischen Frischkäses. Die Säuerung dient ausdrücklich nicht der Einstellung der Konsistenz bzw. der rheologischen Eigenschaften, insbesondere da ein entsprechender Einfluss der Säuerung hinter den Einfluss der Erhitzung und der mechanischen Bearbeitung deutlich zurücktritt - insbesondere beträgt beispielhaft ein etwaiger Einfluss auf eine Konsistenzerhöhung bei direkter Säuerung der pastösen Masse weniger als 15% des absoluten Viskositätsanstiegs bei der Anwendung des erfindungsgemäßen Verfahrens.

Im Hinblick auf den Zeitpunkt der Säuerung und das Säuerungsverfahren gibt es unterschiedliche Möglichkeiten. So kann bereits die pastöse Masse gesäuert werden und/oder die pumpfähige Masse und diese vor und/oder während und/oder nach der Erhitzung und/oder (vor- und/oder während und/oder nach) der mechanischen Bearbeitung. Grundsätzlich kann die Säuerung durch Zugabe einer für Lebensmittel zugelassenen bzw. geeigneten Säuere, wie Zitronensäure und/oder Essigsäure erfolgen. Zusätzlich oder alternativ kann eine Säuerung durch Zugabe von Mikroorganismen und entsprechende Fermentation erfolgen, wobei es grundsätzlich möglich ist, diese Fermentation in unterschiedlichen Verfahrensstufen durchzuführen. So kann die pastöse Masse und/oder die pumpfähige Masse vor oder nach der Erhitzung sowie vor oder nach der mechanischen Bearbeitung durchgeführt werden. Für den Fall, dass eine Erhitzung vor der Fermentierung bzw. Bakterienzugabe erfolgt, wird die Masse zunächst gekühlt auf eine Temperatur <45°C. Auch ist es möglich, eine Säuerung durch Zugabe eines sauren Lebensmittels, wie Zitronensaft oder Essig vorzunehmen.

Für den Fall, dass die Säuerung unter Verwendung von Mikroorganismen erfolgt, wird bzw. werden bevorzugt einer oder mehrerer der folgenden Spezies eingesetzt: Streptococcus thermophilus; Lactobacillus delbrueckii ssp. bulgaricus; Lactobacillus delbrueckii ssp. lactis; Lactobacillus delbrueckii ssp. delbrueckii; Lactobacillus acidophilus; Lactobacillus plantarum; Lactobacillus rhamnosus; Lactobacillus casei; Lactobacillus paracasei; Lactobacillus buchneri; Lactobacillus parabuchneri; Lactococcus lactis ssp. cremoris; Lactococcus lactis ssp. lactis; Lactococcus lactis ssp. lactis biovar. diacetylactis; Leuconostoc lactis; Leuconostoc mesenteroides ssp. cremoris; Leuconostoc mesenteroides subsp. mesenteroides; Bifidobacterium lactis.

Auch im Hinblick auf den Zeitpunkt und die Menge einer bevorzugten Öl- und/oder Fettzugabe gibt es unterschiedliche Möglichkeiten. Grundsätzlich ist es möglich, dass die bereitgestellte Masse bereits zugegebenes Öl und/oder Fett enthält, welches bevorzugt bereits bei der Gewinnung der pastösen Masse, insbesondere bei dem Zerkleinern der Kerne und/oder Nüsse zugegeben wird. Zusätzlich oder alternativ kann Öl und/oder Fett der (fertigen) pastösen Masse zusätzlich zu dem Wasser zum Gewinnen der pumpfähigen Masse zugegeben werden. Unabhängig von dem Zeitpunkt der Zugabe von Öl und/oder Fett ist es vorteilhaft die zugegebene Menge so zu wählen, dass der zugegebene Öl- und/oder Fettanteil am fertigen Lebensmittelprodukt zwischen 0% und 20%, bevorzugt zwischen 0,1% und 20%, vorzugsweise zwischen 5% und 15% entspricht. Auch ist es möglich die Öl- und/oder Fettgabe so zu wählen, dass das fertige Lebensmittelprodukt einen (Gesamt-)Fettgewichtsanteil zwischen 20% und 80% Fett in der Trockenmasse aufweist. Für den Fall, dass Öl und/oder Fett der pastösen Masse bzw. der Mischung aus Wasser und pastöser Masse zum Gewinnen der pumpfähigen Masse zugegeben wird, wird diese bevorzugt so erwärmt, dass das zugegebene Fett schmilzt und somit in flüssiger Form vorliegt.

Wie eingangs bereits erwähnt ist es besonders bevorzugt, wenn der Schritt des Erhitzens in einem Koch-Mischer, beispielsweise einer Stephan-Universalmaschine, insbesondere vom Typ UMC oder alternativ in einem Karl-Schnell-Prozess-Automat durchgeführt wird, in denen dann auch bereits eine mechanische Bearbeitung erfolgt.

Wie ebenfalls eingangs bereits erwähnt wird der Erhitzungsschritt bevorzugt als Pasteurisationsschritt durchgeführt, bevorzugt bei einer Temperatur zwischen 65°C und 140°C und/oder einer Heißhaltezeit von unter 3600s, oder mindestens so, dass die Keimzahl des fertigen Lebensmittelproduktes < 1000 pro Gramm beträgt.

Bevorzugt wird die pastöse Masse hergestellt bzw. enthält, bevorzugt ausschließlich, nicht geröstete sondern lediglich getrocknete Nüsse und/oder Kerne, wobei der Restwassergehalt der Nüsse und/oder Kerne bevorzugt weniger als 4 Gew.%, bevorzugt weniger als 2 Gew.-% beträgt. Bevorzugt beträgt auch der Gesamtwassergehalt der pastösen Masse weniger als 4 Gew.-%, noch weiter bevorzugt weniger als 2 Gew.-%. Besonders zweckmäßig ist es, wenn bei der Bereitstellung der Nüsse und/oder Kerne zur Gewinnung der pastösen Masse oder der pastösen Masse Öl und/oder Fett in einer Menge zugegeben wird, dass sich ein Wassergehalt von weniger als 2 Gew.-% ergibt.

Bei einer besonders bevorzugten Ausführungsvariante des Verfahrens bzw. des Lebensmittelproduktes ist es bevorzugt, wenn die bereitgestellte Masse ausschließlich aus Nüssen und/oder Kernen hergestellt wird oder besteht, wobei besonders gute Erfahrungen gemacht wurden, insbesondere im Hinblick auf eine hohe Helligkeit und/oder einen hohen Weißheitsgrad des fertigen Lebensmittelproduktes wenn die pastöse Masse nicht aus Nüssen sondern ausschließlich aus Kernen und ganz besonders bevorzugt aus blanchierten Mandeln besteht oder daraus gewonnen wird.

Bei Bedarf kann der pastösen Masse und/oder der pumpfähigen Masse (letzterer vor und/oder während und/oder nach der Erhitzung, und/oder vor und/oder während und/oder nach der mechanischen Bearbeitung) Salz zugegeben werden, insbesondere in einer Menge, dass der Salzgehalt des Lebensmittelproduktes zwischen 0,05 Gew.-% und 4 Gew.-%, ganz besonders bevorzugt zwischen 0,1 Gew.-% und 2 Gew.-% beträgt. Ggf. können auch weitere Zutaten zugegeben werden.

Besonders zweckmäßig ist es, wenn die Gesamtwasserzugabe während des Verfahrens so gewählt wird, dass der Wassergehalt des Lebensmittelproduktes zwischen 50 Gew.-% und 82 Gew.-%, vorzugsweise zwischen 60 Gew.-% und 72 Gew.-% beträgt.

Als weitere Zutaten können beispielsweise Kräuter und/oder Gewürze, und/oder Nüsse und/oder Kakao, und/oder Zucker, und/oder Gemüse, und/oder Früchte zugegeben werden, insbesondere in einer Gesamtmenge, dass der Gesamtgewichtsanteil der weiteren Zutaten im fertigen Lebensmittelprodukt zwischen 0,01 Gew.-% und 25 Gew.-% beträgt.

Auch ist es möglich und bevorzugt, dass während des Verfahrens ein für Lebensmittel zugelassenes Verdickungsmittel, insbesondere nach der Zusatzstoffzulassungsverordnung zugegeben wird, insbesondere Johannisbrotkernmehl, bevorzugt zum Zwecke einer Texturanpassung und/oder eines Trockenmassenaustauschs. Bevorzugt beträgt der Gesamtgewichtsanteil an Verdickungsmitteln im fertigen Lebensmittelprodukt zwischen 0,01 Gew.-% und 25 Gew.-%. Auch ist es möglich, auf Verdickungsmittel vollständig zu verzichten.

Auch ist es möglich während des Verfahrens mindestens einen Emulgator, vorzugsweise gemäß der Zulassungsverordnung zuzugeben, insbesondere mit einem Gesamtgewichtsanteil am fertigen Lebensmittelprodukt zwischen 0,01% und 25% zum Zwecke einer weiteren Optimierung der Fetttropfenzerkleinerung und Fetttropfeneinbindung. Der Einsatz eines Emulgators führt üblicherweise zur zusätzlichen Stabilisierung der im mechanischen Schritt erzeugten kleinen Tropfen, die dann im teilaufgeschlossenen Zustand als zusätzlicher Peak bei einer Partikelgröße <10 µm auftauchen. Bevorzugt wird auf den Einsatz von Emulgatoren verzichtet.

Besonders zweckmäßig ist es, wenn die Erhitzung und insbesondere die mechanische Bearbeitung so durchgeführt wird, dass die Partikelgrößenverteilung des Lebensmittelproduktes im nicht aufgeschlossenen Zustand einen x10,3 Partikeldurchmesser aus einem Wertebereich zwischen 5 µm und 15 µm aufweist und/oder einen x90,3 Partikeldurchmesser aus einem Wertebereich zwischen 20 µm und 75 µm.

Die Offenbarung führt auch auf ein Lebensmittelprodukt, welches charakterisiert ist durch die eingangs im Zusammenhang mit dem erfindungsgemäßen Verfahren erläuterten Partikelgrößenparameter, insbesondere einem bevorzugten mittleren Partikeldurchmessers x50,3 <100 µm, vorzugsweise zwischen 10 µm und 40 µm im nicht aufgeschlossenen Zustand sowie durch zumindest einen Peak, insbesondere ein globales Maximum bei der Partikelgrößenverteilung bei einem volumenspezifischen Partikeldurchmesser (Äquivalenzdurchmesser) x3 < 10 µm. Im teilaufgeschlossenen Zustand ist verglichen mit dem nicht aufgeschlossenen Zustand ein zusätzlicher Peak in einem Größenbereich < 10 µm zu beobachten.

Die im Folgenden im Zusammenhang mit dem Lebensmittelprodukt erläuterten vorteilhaften Ausgestaltungen beeinflussen auch vorteilhafte Ausgestaltungen des Verfahrens, indem dort entsprechende Zutaten zugegeben, Verfahrensschritte entsprechend ausgewählt und/oder Verhältniswerte eingestellt werden. Dies gilt selbstverständlich auch anders herum, vorteilhafte Ausgestaltungen bzw. Varianten des Verfahrens können zu ggf. nicht explizit erläuterten, jedoch beanspruchbaren Ausgestaltungsvarianten des erfindungsgemäßen Lebensmittelproduktes führen.

Das Lebensmittelprodukt enthält zwischen 5 Gew.-% und 50 Gew.-% der pastösen Masse, wobei der Gehalt der Nüsse und/oder Kerne an der pastösen Masse ganz besonders bevorzugt 100 Gew.-% beträgt, bevorzugt zumindest jedoch 70 Gew.-%, ganz besonders bevorzugt 80 Gew.-%, noch weiter bevorzugt 90 Gew.-%.

Besonders zweckmäßig ist es, wenn der Gesamtanteil an zugesetztem Fett und/oder Öl am fertigen Lebensmittelprodukt aus einem Wertebereich zwischen 0 Gew.-% und 20 Gew.-% gewählt ist, insbesondere zwischen 0,1 Gew.-% und 20 Gew.-%. Erfindungsgemäß beträgt der Gesamtwassergehalt des fertigen Lebensmittelproduktes zwischen 50 Gew.-% und 82 Gew.-%, ganz besonders bevorzugt zwischen 60 Gew.-% und 72 Gew.-%. Bevorzugt beträgt der Öl- bzw. Fettgehalt in der Trockenmasse zwischen 30 Gew.-% und 80 Gew.-%, vorzugsweise zwischen 50 Gew.-% und 75 Gew.-% und/oder der Salzgehalt zwischen 0,05 Gew.-% und 4 Gew.-%, bevorzugt zwischen 0,1 Gew.-% und 2 Gew.-%.

Erfindungsgemäß ist zur Simulation eines Frischkäseproduktes vorgesehen, dass die Festigkeit, wie einleitend erläutert gemessen, des Lebensmittelproduktes so eingestellt wird, dass diese einen Wert aus einem Wertebereich zwischen 0,2 N und 7,0 N, vorzugsweise zwischen 0,5 N und 2,5 N aufweist, jeweils gemessen bei 10°C.

Insgesamt ist es von Vorteil, wenn der Großteil, bevorzugt mindestens 90 Gew-% des Gesamtöl- und/oder Fettanteils des Lebensmittelproduktes (selbstverständlich im nicht aufgeschlossenen Zustand) in Mikrogelpartikeln auf Nuss- und/oder Kernbasis eingebunden ist, d.h. nicht als freie Fettphase vorliegt. Besonders bevorzugt ist eine Ausführungsform, bei der bei Betrachtung unter dem Lichtmikroskop bei 40-facher Vergrößerung im in Wasser dispergierten, nicht aufgeschlossenen Zustand des Lebensmittelproduktes keine freien Fetttropfen zu erkennen sind.

Ganz besonders bevorzugt ist es, wenn das Lebensmittelprodukt frei ist von Zutaten auf (tierischer-)Milchbasis - besonders bevorzugt ist das Lebensmittelprodukt vegan.

Das erfindungsgemäße Lebensmittelprodukt kann auf unterschiedliche Arten Verwendung finden. Besonders bevorzugt ist es das Lebensmittelprodukt pur (eigenständig) als Lebensmittel zu verwenden oder alternativ als Bestandteil eines, bevorzugt industriell hergestellten Lebensmittelproduktes. So ist es auch möglich das erfindungsgemäße Lebensmittelprodukt als Mischung mit Milchprodukten, beispielsweise in Frischkäse, Joghurt oder Quark einzusetzen.

Konkrete Beispiele für bevorzugte Verwendungen bzw. Einsatzzwecke sind die Verwendung als Brotaufstrich oder als Füllung oder Rezepturbestandteil von Backwaren, oder Süßwaren oder Antipasti, oder Nudeln, oder als Bestandteil von Feinkostsalaten, oder Soßen, oder Dressings, als Einsatz in Eiscreme oder, insbesondere pur zur Verwendung als Käseersatzstoff, insbesondere Frischkäseersatzstoff.

Auch ein Einsatz als Rohstoff oder Rezepturbestandteil anderer Käseersatzstoffe, wie beispielsweise Ersatzstoffe für Weißkäse, Mozzarella sowie Hart- und Schnittkäse, ist möglich.

Auch ist es möglich, dem Lebensmittelprodukt bei der Herstellung tierische Produkte, wie Sahne oder Butter zuzuführen, insbesondere zu Einstellung des Fettgehaltes und/oder das Lebensmittelprodukt als Zugabe zu butterhaltigen oder sahnehaltigen Lebensmitteln zu verwenden. Dann ist das Lebensmittelprodukt bzw. das Lebensmittel selbstverständlich nicht vegan.

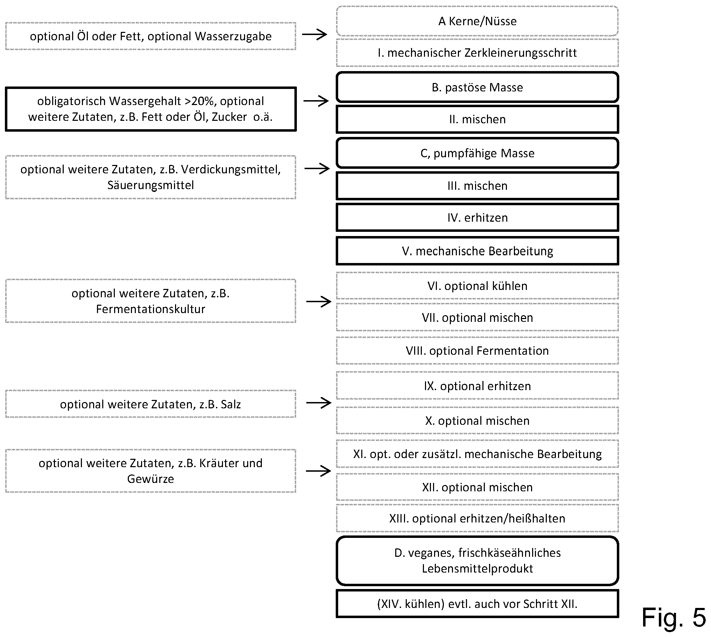

Im Folgenden wird anhand des Blockdiagramms gemäß Fig. 5 die mögliche Ausgestaltung eines erfindungsgemäßen Verfahrens mit einer Vielzahl von optionalen Verfahrensschritten erläutert.

Erster wesentlicher Verfahrensschritt ist Schritt B. Es wird eine pastöse Masse bereitgestellt, die fakultativ in einem vorhergehenden Verfahrensschritt A aus Kernen und/oder Nüssen mittels eines mechanischen Zerkleinerungsschrittes gewonnen werden kann, wobei zur Herstellung der pastösen Masse optional Öl und/oder Fett zugegeben werden kann.

Optional ist eine Wasserzugabe, wobei bevorzugt auf eine Wasserzugabe zur Herstellung der pastösen Masse verzichtet wird. Die pastöse Masse kann beispielsweise auf Basis von getrockneten, bevorzugt nicht gerösteten Mandeln mit einem Restwassergehalt von <2 Gew-% hergestellt werden, wobei die Zerkleinerung beispielsweise mit einer Schlagmessermühle und/oder Kugelmühle erfolgen kann. Wird die pastöse Masse ausschließlich auf Basis von Mandeln, d.h. keinen Nüssen oder sonstigen Kernen hergestellt, handelt es sich bei der pastösen Masse um ein Mandelmus. Als weiterer wesentlicher Verfahrensschritt wird die pumpfähige Masse C hergestellt und zwar durch Mischen (Schritt II) der pastösen Masse mit Wasser, so dass der Trockenmassegewichtsanteil der pumpfähigen Masse <80% beträgt, was einem Wassergehalt >20% entspricht. Optional ist die Zugabe von Zutaten wie Fett, Öl und/oder Zucker möglich. Bei Bedarf können der pumpfähigen Masse weitere Zutaten, wie Verdickungsmittel, beispielsweise Johannisbrotkernmehl und/oder Säuerungsmittel, wie Zitronensäure und/oder Essigsäure zugegeben werden. Es erfolgt dann ein (weiterer) Mischschritt III und ein Erhitzungsschritt IV sowie eine mechanische Bearbeitung V, vorzugsweise ein Hochdruckhomogenisieren. Die Schritte II bis IV und ggf. auch noch die später zu erläuternden Schritte IV bis IX oder einzelne dieser Schritte können beispielsweise in einem Koch-Mischer durchgeführt werden.

Der Erhitzungsschritt kann beispielsweise auch nach der mechanischen Bearbeitung erfolgen. Jedenfalls resultiert aus Erhitzung und mechanischer Bearbeitung ein erfindungsgemäßes Lebensmittelprodukt, welches bevorzugt vegan und frischkäseähnlich ist (siehe D).

Bevorzugt nach der mechanischen Bearbeitung sind eine Vielzahl von optionalen sich aus dem Blockdiagramm ergebenden Verfahrensschritten realisierbar, die einzeln oder in beliebiger Kombination durchführbar und auch beanspruchbar sind. So kann beispielsweise nach einem optionalen Kühlen nach der mechanischen Bearbeitung zusätzlich oder alternativ zu einer vorherigen Säurezugabe eine Fermentationskultur zum Zwecke der Säuerung zugegeben werden, wobei dann optional eine Mischung gemäß Schritt VII erfolgt und danach eine optionale Fermentation gemäß Schritt VIII. Zur Inaktivierung der Mikroorganismen kann dann optional ein Erhitzungsschritt IX erfolgen und bei Bedarf können dann weitere Zutaten, wie Salz zugegeben werden. Falls diese weiteren Zutaten, wie Salz zugegeben werden, erfolgt in Schritt X ein optionales Mischen.

Bei Bedarf können weitere oder alternative Zutaten wie Kräuter oder Gewürze zugegeben werden und/oder es kann eine weitere zusätzliche mechanische Bearbeitung erfolgen, beispielsweise eine zusätzliche Hochdruckhomogenisierung, wenn eine bestimmte Partikel-/Fettverteilung erreicht werden soll.

Bevorzugt wird, insbesondere wenn dies noch nicht vorher geschehen ist, das Lebensmittelprodukt gekühlt (siehe Schritt XIV).

Eine beispielhaft, nach dem Konzept der Erfindung ausgebildete Rezeptur/Verfahren lautet wie folgt:
Es wird eine pastöse Masse hergestellt oder bereitgestellt, die ausschließlich aus Mandeln, insbesondere durch Zermahlen der Mandeln hergestellt wurde. Der Gewichtsanteil der Mandeln beträgt beispielhaft 17,2 Gew-% des fertigen Lebensmittelproduktes. Das fertige Lebensmittelprodukt enthält ein Gesamtgewichtsanteil an Wasser von beispielhaft 69,25 Gew-%, wobei der hierfür notwendige Wasserzusatz zur pastösen Masse zugegeben wird, um die pumpfähige Masse zu erhalten. Ferner wird zum Erhalten der pumpfähigen Masse Öl und/oder Fett zugesetzt, so dass in einer Menge der Gesamtfett- und/oder Ölanteil des fertigen Lebensmittelproduktes 12,5% beträgt.

Ferner wird zur Herstellung der pumpfähigen Masse Salz zugegeben, sowie Zitronensäure und zwar Salz in einer Menge, dass der Gesamtgewichtsanteil des Salzes am fertigen Lebensmittelprodukt 0,8 Gew-% beträgt und der Zitronensäuregewichtsanteil 0,25 Gew-%.

Die so erhaltene pumpfähige Masse wird in einem Kochmischer erhitzt auf eine Temperatur von 85°C, wobei diese Temperatur über 120s. gehalten wird.

Nach der Erhitzung erfolgt eine zweistufige Hochdruckhomogenisierung, wobei in der ersten Druckstufe 400 bar und in der zweiten Druckstufe 80 bar abgebaut werden.

Daraufhin erfolgt eine Kühlung auf Raumtemperatur.

Die Partikelgrößenverteilungen des Lebensmittelproduktes, das aus dieser beispielhaften, nach dem Konzept der Erfindung resultierenden Rezeptur hergestellt wurde, sind in Fig. 2 dargestellt, sowie die mikroskopischen Aufnahmen in den Abbildungen b1 bis b3 gemäß Fig. 1 im nicht aufgeschlossenen Zustand (Abbildung b1) bzw. im aufgeschlossenen Zustand b2 und b3.

## Patentansprüche

1. Verfahren zum Herstellen eines frischkäseähnlichen, bevorzugt veganen, Lebensmittelproduktes mit den Schritten:
- Bereitstellen einer Masse aus zerkleinerten Nüssen und/oder Kernen;
- Zugeben von Wasser zu der Masse und Gewinnen einer pumpfähigen Masse, so dass ein Trockenmassegewichtsanteil der pumpfähigen Masse <80%, bevorzugt <60%, besonders bevorzugt <40% erreicht wird;
- Gewinnen des Lebensmittelproduktes aus der pumpfähigen Masse unter Erhitzen auf eine Temperatur aus einem Temperaturbereich zwischen 65°C und 140°C, und mechanischem Bearbeiten derart,
∘ dass das erhaltene Lebensmittelprodukt in einem nicht aufgeschlossenen Zustand eine Partikelgrößenverteilung aufweist, die **gekennzeichnet ist durch** eine in destilliertem Wasser mit einem Laserbeugungsspektrometer gemessene Partikelgrößenverteilung mit einem mittleren Partikeldurchmesser x50,3 <100 µm, bevorzugt zwischen 10 und 40 µm, sowie **durch** zumindest einen Peak, insbesondere ein globales Maximum, bei einem Partikeldurchmesser x3 >10 µm,
und derart,
∘ dass das Lebensmittelprodukt in einem teilaufgeschlossenen Zustand, welcher erhalten wird **durch** Mischen eines Gewichtsteils des Lebensmittelproduktes mit neun Gewichtsteilen einer SDS-EDTA-Lösung (0,25% SDS; 0,25% EDTA), eine in destilliertem Wasser mit einem Laserbeugungsspektrometer gemessene Partikelgrößenverteilung aufweist, die gegenüber dem nicht aufgeschlossenen Zustand mindestens einen zusätzlichen Peak bei einem Partikeldurchmesser x3 <10 µm aufweist.
**dadurch** gekennzeichnet,
dass die bereitgestellte Masse aus zerkleinerten Nüssen und/oder Kernen pastös ist, und dass der Erhitzungsschritt vor und/oder während der mechanischen Bearbeitung durchgeführt wird, und dass der Gesamtwassergehalt des fertigen Lebensmittelproduktes zwischen 50 Gew.-% und 82 Gew.-% beträgt, und dass das Lebensmittelprodukt eine bei 10°C mit einer Texturprüfmaschine, bei der ein runder Pressstempel mit einer Fläche von 1,27cm² mit einer Geschwindigkeit von 2mm/s in eine Probe eindringt, gemessene Festigkeit aus einem Wertebereich zwischen 0,2 N und 7,0 N aufweist.

2. Verfahren nach Anspruch 1,
**dadurch gekennzeichnet,**
**dass** die Erhitzung bevorzugt zwischen 75°C und 95°C durchgeführt wird.

3. Verfahren nach einem der Ansprüche 1 oder 2,
**dadurch gekennzeichnet, dass** die Erhitzung derart durchgeführt wird, dass es zu einem Viskositätsanstieg der erhitzen Masse im Vergleich zu vor dem Erhitzungsschritt um mindestens 100%, bevorzugt um mindestens 300% kommt und/oder dass die Erhitzung und die mechanische Bearbeitung derart durchgeführt werden, dass es zu einem Viskositätsanstieg von mindestens 250%, bevorzugt mindestens 500%, kommt, wobei die rheologische Messung mit einem mit einem Rotationsviskosimeter durchgeführt wird mit einem 14mm Messkörper in einem Probengefäß mit 55mm bei einer Drehzahl von 50 1/min ohne Messrohr bei einer Temperatur von 10°C±2°C.

4. Verfahren nach einem der vorhergehenden Ansprüche,
**dadurch gekennzeichnet,**
**dass** das Erhitzen und/oder das mechanische Bearbeiten derart durchgeführt wird, dass die Farbe des Lebensmittelproduktes im CIELAB-Farbraum mit den kartesischen Basiskoordinaten L*, a*, b*, gemäß EN ISO 11664-4:2011 definiert ist durch L* >78 und/oder a* zwischen -3 und +1 und/oder b* zwischen -1 und +9 und/oder derart, dass durch das Erhitzen und/oder die mechanische Bearbeitung im CIELAB-Farbraum mit den kartesischen Koordinaten L*, a*, b*, gemäß EN ISO 11664-4:2011 L* um mindestens 5, bevorzugt um einen Wert aus einem Wertebereich zwischen 5 und 25 erhöht wird.

5. Verfahren nach einem der vorhergehenden Ansprüche,
**dadurch gekennzeichnet,**
**dass** die bereitgestellte pastöse Masse gewonnen wird durch das Zerkleinern von Nüssen und/oder Mandeln, bevorzugt ohne Wasserzugabe und/oder ohne Salzzugabe und/oder ohne Zuckerzugabe und/oder ohne Zugabe von Emulgatoren und/oder ohne Zugabe von Verdickungsmitteln.

6. Verfahren nach einem der vorhergehenden Ansprüche,
**dadurch gekennzeichnet,**
**dass** es sich bei der mechanischen Bearbeitung um eine, insbesondere ein- oder mehrstufige, Hochdruckhomogenisierung handelt, bevorzugt bei einem Druck von 25 bis 600 bar, besonders bevorzugt von 100 bis 400 bar.

7. Verfahren nach einem der vorhergehenden Ansprüche,
**dadurch gekennzeichnet,**
**dass** der pH-Wert des Lebensmittelproduktes, insbesondere durch Säuern der pastöse Masse und/oder pumpfähigen Masse und/oder vor und/oder während und/oder nach der Erhitzung und/oder mechanischen Bearbeitung einen pH-Wert kleiner 5,5 und/oder aus einem Wertebereich zwischen 4 und 5,4 eingestellt wird.

8. Verfahren nach einem der vorhergehenden Ansprüche,
**dadurch gekennzeichnet,**
**dass** den Kernen und/oder Nüssen zum Gewinnen der pastösen Masse Öl und/oder Fett zugegeben wird und/oder dass der pastösen Masse neben Wasser zum Gewinnen der pumpfähigen Masse Öl und/oder Fett zugegeben wird, wobei bevorzugt die Gesamtmenge an zugegebenem Öl und/oder Fett einem Gewichtsanteil des Lebensmittelproduktes zwischen 0,1% und 20%, vorzugsweise zwischen 5% und 15% entspricht und/oder so gewählt wird, dass das Lebensmittelprodukt einen Fettgewichtsanteil zwischen 20% und 80% Fett in der Trockenmasse aufweist.

9. Verfahren nach einem der vorhergehenden Ansprüche,
**dadurch gekennzeichnet,**
**dass** das Erhitzen in einem Koch-Mischer durchgeführt wird.

10. Verfahren nach einem der vorhergehenden Ansprüche,
**dadurch gekennzeichnet,**
**dass** die Mischung aus Wasser und pastöser Masse zum Gewinnen der pumpfähigen Masse so erwärmt wird, dass das zugegebene Fett in flüssiger Form vorliegt.

11. Verfahren nach einem der vorhergehenden Ansprüche,
**dadurch gekennzeichnet,**
**dass** die, vorzugsweise nicht gerösteten, Nüsse und/oder Kerne zur Gewinnung der pastösen Masse und/oder der bereitgestellten pastösen Masse getrocknet, vorzugsweise auf einen Restwassergehalt von weniger als 4 Gew-%, bevorzugt <2 Gew-% sind und/oder die bereitgestellte pastöse Masse einen Wassergehalt von weniger als 4Gew-%, bevorzugt von <2Gew-% aufweist und/oder dass den Nüssen und/oder Kernen zur Gewinnung der pastösen Masse oder der bereitgestellten pastösen Masse Öl und/oder Fett in einer Menge zugegeben wird, dass sich ein Wassergehalt von <2 Gew.% ergibt.

12. Verfahren nach einem der vorhergehenden Ansprüche,
**dadurch gekennzeichnet,**
**dass** die bereitgestellte pastöse Masse ausschließlich aus Nüssen und/oder Kernen, bevorzugt ausschließlich, Kernen, ganz besonders bevorzugt ausschließlich, vorzugsweise blanchierten, Mandeln besteht und/oder daraus gewonnen wird.

13. Frischkäseähnliches Lebensmittelprodukt, bevorzugt erhalten durch ein Verfahren nach einem der vorhergehenden Ansprüche, enthaltend zerkleinerte Nüsse und/oder Kerne, bevorzugt Mandeln, wobei das frischkäseähnliche Lebensmittelprodukt in einem nicht aufgeschlossenen Zustand eine Partikelgrößenverteilung aufweist, die **gekennzeichnet ist durch** eine in destilliertem Wasser mit einem Laserbeugungsspektrometer gemessene Partikelgrößenverteilung mit einem mittleren Partikeldurchmesser x50,3 <100 µm, bevorzugt zwischen 10 und 40 µm, sowie **durch** zumindest einen Peak, insbesondere ein globales Maximum, bei einem Partikeldurchmesser x3 >10 µm, und dass das Lebensmittelprodukt in einem teilaufgeschlossenen Zustand, welcher erhalten wird **durch** Mischen eines Gewichtsteils des Lebensmittelproduktes mit neun Gewichtsteilen einer SDS-EDTA-Lösung (0,25% SDS, 0,25% EDTA), eine in destilliertem Wasser mit einem Laserbeugungsspektrometer gemessene Partikelgrößenverteilung aufweist, die gegenüber dem nicht aufgeschlossenen Zustand mindestens einen zusätzlichen Peak bei einem Partikeldurchmesser x3 <10 µm aufweist,
**dadurch** gekennzeichnet,
dass das Lebensmittelprodukt eine bei 10°C mit einer Texturprüfmaschine, bei der ein runder Stempel mit einer Fläche von 1,27cm² mit einer Geschwindigkeit von 2mm/s in eine Probe eindringt, gemessene Festigkeit aus einem Wertebereich zwischen 0,2 N und 7,0 N aufweist, und dass der Gesamtwassergehalt des fertigen Lebensmittelproduktes zwischen 50 Gew.-% und 82 Gew.-% beträgt, und dass das Lebensmittelprodukt zwischen 5 Gew.-% und 50 Gew.-% einer pastösen Masse enthält, die einen Gehalt an Nüssen und/oder Kernen von mindestens 70 Gew.-% aufweist.

14. Lebensmittelprodukt nach Anspruch 13,
**dadurch gekennzeichnet**,
das die Textureigenschaft rau-bremsend des Lebensmittelproduktes, bestimmt durch ein deskriptives Sensorikpanel gemäß DIN 10967 unter Verwendung eines Magerquarks mit 20 Gew-% Fett in der Trockenmasse als Referenzprodukt größer als 2,5 ist und/oder einen Wert aus einem Wertebereich zwischen 3 und 7,5 aufweist.

15. Lebensmittelprodukt nach einem der Ansprüche 13 oder 14,
**dadurch gekennzeichnet,**
**dass** das Lebensmittelprodukt eine Festigkeit aus einem Wertebereich zwischen 0,5N und 2,5N, gemessen bei 10 °C, aufweist.

16. Lebensmittelprodukt nach einem der Ansprüche 13 bis 15,
**dadurch gekennzeichnet,**
**dass** zumindest 90 Gew-%, bevorzugt zumindest 98 Gew-% des Öl und/oder Fettanteils des Lebensmittelproduktes in Mikrogelpartikel auf Nuss- und/oder Kernbasis eingebunden sind.

17. Lebensmittelprodukt nach einem der Ansprüche 13 bis 16,
**dadurch gekennzeichnet,**
**dass** die Partikelgrößenverteilung des Lebensmittelproduktes im nicht aufgeschlossenen Zustand einen x10,3 Partikeldurchmesser aus einem Wertebereich zwischen 5 und 15 µm aufweist und oder einen x90,3 Partikeldurchmesser aus einem Wertebereich zwischen 20 und 75 µm.

18. Lebensmittelprodukt nach einem der Ansprüche 13 bis 17,
**dadurch gekennzeichnet,**
**dass** der pH Wert aus einem Wertebereich zwischen 4,0 und 5,4, bevorzugt zwischen 4,6 und 5,0 beträgt.

19. Lebensmittelprodukt nach einem der Ansprüche 13 bis 18,
**dadurch gekennzeichnet,**
**dass** der Wassergehalt zwischen 60 und 72 Gew-% beträgt und/oder dass der Fettgehalt in der Trockenmasse zwischen 30 und 80 Gew-%, bevorzugt zwischen 50 und 75 Gew-% beträgt und/oder dass der NaCl-Gehalt zwischen 0,05 und 4 Gew-%, bevorzugt zwischen 0,1 und 2 Gew-% beträgt.

20. Lebensmittelprodukt nach einem der Ansprüche 13 bis 19,
**dadurch gekennzeichnet,**
**dass** die Farbe des Lebensmittelproduktes im CIELAB-Farbraum mit den kartesischen Basiskoordinaten L*, a*, b*, gemäß EN ISO 11664-4:2011 definiert ist durch L* ≥78 und/oder a* zwischen -3 und +1 und/oder b* zwischen -1 und +9.

21. Verwendung eines Lebensmittelproduktes nach einem der Ansprüche 13 bis 20 als pures Lebensmittel oder als Rezepturbestandteil, insbesondere Füllung oder Zusatz in einem, insbesondere industriell hergestellten, Lebensmittel.

## Claims

1. A method for producing a cream cheese-like food product, preferably a vegan food product, comprising the steps:
- providing a mass of comminuted nuts and/or seeds;
- adding water to the mass and obtaining a pumpable mass, achieving a proportion by weight of dry mass of the pumpable mass < 80 %, preferably < 60 %, particularly preferably < 40 % ;
- obtaining the food product from the pumpable mass by heating to a temperature from a temperature range between 65 °C and 140 °C and mechanical processing such that
∘ the food product obtained has, in an undisrupted state, a particle size distribution which is **characterized by** a particle size distribution, as measured in distilled water using a laser diffraction spectrometer, having a mean particle diameter x50,3 < 100 µm, preferably between 10 and 40 µm, and also by at least one peak, in particular a global maximum, at a particle diameter x3 > 10 µm,
and such that
∘ the food product has, in a partially disrupted state obtained by mixing one part by weight of the food product with nine parts by weight of an SDS-EDTA solution (0.25 % SDS; 0.25 % EDTA), a particle size distribution, as measured in distilled water using a laser diffraction spectrometer, which has, compared to the undisrupted state, at least one additional peak at a particle diameter x3 < 10 µm,
**characterized in that**
the provided mass of comminuted nuts and/or seeds is pasty, and that the heating step is carried out before and/or during the mechanical processing, and that the total water content of the finished food product is between 50 % by weight and 82 % by weight, and that the food product has a firmness from a value range between 0.2 N and 7.0 N, which firmness is measured at 10 °C using a texture testing machine in which a round pressing punch having an area of 1.27 cm² penetrates into a sample at a rate of 2 mm/s.

2. The method as claimed in claim 1,
**characterized in that**
the heating is preferably carried out between 75 °C and 95 °C.

3. The method as claimed in any one of claims 1 or 2,
**characterized in that**
the heating is carried out such that there is a rise in viscosity of the heated mass, compared to before the heating step, by at least 100 %, preferably by at least 300 %, and/or that the heating and the mechanical processing are carried out such that there is a rise in viscosity of at least 250 %, preferably at least 500 %, wherein the rheological measurement is carried out using a rotational viscometer with a 14 mm measurement body in a sample vessel of 55 mm at a speed of 50 1/min without measurement tube at a temperature of 10 °C ± 2 °C.

4. The method as claimed in any one of the preceding claims,
**characterized in that**
the heating and/or the mechanical processing is carried out such that the color of the food product in the CIELAB color space with the Cartesian base coordinates L*, a*, b* according to EN ISO 11664-4:2011 is defined by L* ≥ 78 and/or a* between -3 and +1 and/or b* between -1 and +9 and/or such that the heating and/or the mechanical processing increases, in the CIELAB color space with the Cartesian coordinates L*, a*, b* according to EN ISO 11664-4:2011, L* by at least 5, preferably by a value from a value range between 5 and 25.

5. The method as claimed in any one of the preceding claims,
**characterized in that**
the provided pasty mass is obtained by the comminution of nuts and/or almonds, preferably without addition of water and/or without addition of salt and/or without addition of sugar and/or without addition of emulsifiers and/or without addition of thickeners.

6. The method as claimed in any one of the preceding claims,
**characterized in that**
the mechanical processing is a high-pressure homogenization, in particular a one-step or multistep high-pressure homogenization, preferably at a pressure of from 25 to 600 bar, particularly preferably from 100 to 400 bar.

7. The method as claimed in any one of the preceding claims,
**characterized in that**
pH of the food product is adjusted to a pH of less than 5.5 and/or from a value range between 4 and 5.4, in particular by acidification of the pasty mass and/or pumpable mass and/or prior and/or during and/or after the heating and/or the mechanical processing.

8. The method as claimed in any one of the preceding claims,
**characterized in that**
oil and/or fat is added to the seeds and/or nuts in order to obtain the pasty mass and/or that oil and/or fat is added in addition to water to the pasty mass in order to obtain the pumpable mass, wherein the total amount of added oil and/or fat preferably corresponds to a proportion by weight of the food product between 0.1 % and 20 %, preferably between 5 % and 15 %, and/or is selected such that the food product has a proportion by weight of fat between 20 % and 80 % fat in the dry mass.

9. The method as claimed in any one of the preceding claims,
**characterized in that**
the heating is carried out in a cooking mixer.

10. The method as claimed in any one of the preceding claims,
**characterized in that**
the mixture of water and pasty mass for obtaining the pumpable mass is warmed such that the added fat is present in liquid form.

11. The method as claimed in any one of the preceding claims,
**characterized in that**
the preferably unroasted nuts and/or seeds for obtaining the pasty mass and/or the provided pasty mass have been dried to a residual water content of preferably less than 4 % by weight, preferably < 2 % by weight, and/or the provided pasty mass has a water content of less than 4 % by weight, preferably < 2 % by weight, and/or that oil and/or fat is added to the nuts and/or seeds for obtaining the pasty mass or to the provided pasty mass in an amount resulting in a water content of < 2 % by weight.

12. The method as claimed in any one of the preceding claims,
**characterized in that**
the provided pasty mass consists solely of and/or is obtained solely from nuts and/or seeds, preferably solely seeds, particularly preferably solely almonds, preferably blanched.

13. A cream cheese-like food product, preferably obtained through a method according to any one of the preceding claims, containing comminuted nuts and/or seeds, preferably almonds, wherein the cream cheese-like food product has, in an undisrupted state, a particle size distribution which is **characterized by** a particle size distribution, as measured in distilled water using a laser diffraction spectrometer, having a mean particle diameter x50,3 < 100 µm, preferably between 10 and 40 µm, and also by at least one peak, in particular a global maximum, at a particle diameter x3 > 10 µm, and wherein the food product has, in a partially disrupted state obtained by mixing one part by weight of the food product with nine parts by weight of an SDS-EDTA solution (0.25 % SDS; 0.25 % EDTA), a particle size distribution, as measured in distilled water using a laser diffraction spectrometer, which has, compared to the undisrupted state, at least one additional peak at a particle diameter x3 < 10 µm,
**characterized in that**
the food product has a firmness from a value range between 0.2 N and 7.0 N, which firmness is measured at 10 °C using a texture testing machine in which a round punch having an area of 1.27 cm² penetrates into a sample at a rate of 2 mm/s, and that the total water content of the finished food product is between 50 % by weight and 82 % by weight, and that the food product contains between 5 % by weight and 50 % by weight of a pasty mass comprising a content of nuts and/or seeds of at least 70 % by weight.

14. The food product as claimed in claim 13,
**characterized in that**
the texture property coarse-thick of the food product, determined by a descriptive sensory panel in accordance with DIN 10967 using a low-fat quark containing 20 % by weight of fat in the dry mass as reference product, is greater than 2.5 and/or has a value from a value range between 3 and 7.5.

15. The food product as claimed in any one of claims 13 or 14,
**characterized in that**
the food product has a firmness from a value range between 0.5 N and 2.5 N, measured at 10 °C.

16. The food product as claimed in any one of claims 13 to 15,
**characterized in that**
at least 90 % by weight, preferably at least 98 % by weight, of the oil and/or fat proportion of the food product are incorporated in microgel particles based on nuts and/or seeds.

17. The food product as claimed in any one of claims 13 to 16,
**characterized in that**
the particle size distribution of the food product in the undisrupted state has an x10,3 particle diameter from a value range between 5 and 15 µm and/or an x90,3 particle diameter from a value range between 20 and 75 µm.

18. The food product as claimed in any one of claims 13 to 17,
**characterized in that**
the pH is from a value range between 4.0 and 5.4, preferably between 4.6 and 5.0.

19. The food product as claimed in any one of claims 13 to 18,
**characterized in that**
the water content is between 60 and 72 % by weight and/or that the fat content in the dry mass is between 30 and 80 % by weight, preferably between 50 and 75 % by weight, and/or that the NaCl content is between 0.05 and 4 % by weight, preferably between 0.1 and 2 % by weight.

20. The food product as claimed in any one of claims 13 to 19,
**characterized in that**
the color of the food product in the CIELAB color space with the Cartesian base coordinates L*, a*, b* according to EN ISO 11664-4:2011 is defined by L* ≥ 78 and/or a* between -3 and +1 and/or b* between -1 and +9.

21. A use of a food product as claimed in any one of claims 13 to 20 as a pure foodstuff or as part of a recipe, in particular as filling or additive in a foodstuff, in particular in an industrially produced foodstuff.

## Revendications

1. Procédé de production d'un produit alimentaire semblable au fromage frais, de préférence d'un produit alimentaire végétalien, comprenant les étapes consistant à :
- fournir une masse de noix broyées et/ou de graines broyées ;
- ajouter de l'eau à la masse et obtenir une masse pompable de sorte qu'une proportion en poids de masse sèche de la masse pompable de < 80 %, de préférence < 60 %, de préférence particulière < 40 %, est atteinte ;
- obtenir le produit alimentaire à partir de la masse pompable par chauffage à une température dans une plage de températures entre 65 °C et 140 °C et par traitement mécanique de telle manière que
∘ le produit alimentaire obtenu a, dans un état non désintégré, une distribution granulométrique **caractérisée par** une distribution granulométrique, mesurée dans l'eau distillée utilisant un spectromètre de diffraction laser, qui a un diamètre de particule moyen de x50,3 < 100 µm, de préférence entre 10 et 40 µm, ainsi que par au moins un pic, notamment un maximum global, à un diamètre de particule de x3 > 10 µm,
et de telle manière que
∘ le produit alimentaire a, dans un état partiellement désintégré obtenu en mélangeant une partie en poids du produit alimentaire avec neuf parties en poids d'une solution SDS-EDTA (0,25 % SDS; 0,25 % EDTA), une distribution granulométrique, mesurée dans l'eau distillée utilisant un spectromètre de diffraction laser, qui a au moins un pic additionnel à un diamètre de particule de x3 < 10 µm par comparaison à l'état non désintégré,
**caractérisé en ce que**
la masse fournie de noix et/ou de graines broyées est pâteuse, et **en ce que** l'étape de chauffage est effectué avant et/ou pendant le traitement mécanique, et **en ce que** la teneur totale en eau du produit alimentaire fini est entre 50 % en poids et 82 % en poids, et **en ce que** le produit alimentaire a une solidité dans une plage de valeurs entre 0,2 N et 7,0 N, la solidité étant mesurée à 10 °C utilisant une machine d'essai de texture dans laquelle un poinçon de pressage rond ayant une surface de 1,27 cm² pénètre dans un échantillon à une vitesse de 2 mm/s.

2. Procédé selon la revendication 1,
**caractérisé en ce que**
le chauffage est effectué de préférence entre 75 °C et 95 °C.

3. Procédé selon l'une quelconque des revendications 1 ou 2,
**caractérisé en ce que**
le chauffage est effectué de telle manière qu'il y a une augmentation de la viscosité de la masse chauffée par au moins 100 %, de préférence par au moins 300 %, par comparaison à avant l'étape de chauffage, et/ou **en ce que** le chauffage et le traitement mécanique sont effectués de telle manière qu'il y a une augmentation de la viscosité d'au moins 250 %, de préférence au moins 500 %, la mesure rhéologique étant effectuée utilisant un viscosimètre rotatif ayant un corps de mesure de 14 mm dans un récipient d'échantillon de 55 mm à une vitesse de 50 1/min sans tube de mesure à une température de 10 °C ± 2 °C.

4. Procédé selon l'une quelconque des revendications précédentes,
**caractérisé en ce que**
le chauffage et/ou le traitement mécanique est effectué de telle manière que la couleur du produit alimentaire dans l'espace de couleur CIELAB avec les coordonnées de base cartésiennes L*, a*, b* selon EN ISO 11664-4:2011 est définie par L* ≥ 78 et/ou a* entre -3 et +1 et/ou b* entre -1 et +9 et/ou de telle manière que le chauffage et/ou le traitement mécanique augmente L* par au moins 5, de préférence par une valeur dans la plage de valeurs entre 5 et 25, dans l'espace de couleur CIELAB avec les coordonnées de base cartésiennes L*, a*, b* selon EN ISO 11664-4:2011.

5. Procédé selon l'une quelconque des revendications précédentes,
**caractérisé en ce que**
la masse pâteuse fournie est obtenue par le broyage de noix et/ou d'amandes, de préférence sans addition d'eau et/ou sans addition de sel et/ou sans addition de sucre et/ou sans addition d'émulsifiants et/ou sans addition d'épaississants.

6. Procédé selon l'une quelconque des revendications précédentes,
**caractérisé en ce que**
le traitement mécanique est une homogénéisation à haute pression, notamment en une étape ou en plusieurs étapes, de préférence à une pression allant de 25 à 600 bar, de préférence particulière de 100 à 400 bar.

7. Procédé selon l'une quelconque des revendications précédentes,
**caractérisé en ce que**
le pH du produit alimentaire est réglé à un pH inférieur à 5,5 et/ou dans une plage de valeurs entre 4 et 5,4, notamment en acidifiant la masse pâteuse et/ou la masse pompable et/ou avant et/ou pendant et/ou après le chauffage et/ou le traitement mécanique.

8. Procédé selon l'une quelconque des revendications précédentes,
**caractérisé en ce que**
de l'huile et/ou de la graisse est ajoutée aux graines et/ou aux noix afin d'obtenir la masse pâteuse et/ou que de l'huile et/ou de la graisse est ajouté en plus de l'eau à la masse pâteuse afin d'obtenir la masse pompable, la teneur totale en huile et/ou en graisse correspondant de préférence à une proportion en poids du produit alimentaire d'entre 0,1 % et 20 %, de préférence entre 5 % et 15 %, et/ou étant sélectionnée de telle manière que le produit alimentaire a une proportion en poids de graisse d'entre 20 % et 80 % de graisse dans la masse sèche.

9. Procédé selon l'une quelconque des revendications précédentes,
**caractérisé en ce que**
le chauffage est effectué dans un mélangeur-cuiseur.

10. Procédé selon l'une quelconque des revendications précédentes,
**caractérisé en ce que**
le mélange d'eau de de masse pâteuse pour obtenir la masse pompable est chauffé de telle manière que la graisse ajutée est en forme liquide.

11. Procédé selon l'une quelconque des revendications précédentes,
**caractérisé en ce que**
les noix et/ou les graines de préférence non grillées pour obtenir la masse pâteuse et/ou la masse pâteuse fournie ont été séchés de préférence à une teneur en eau résiduelle inférieure à 4 % en poids, de préférence < 2 % en poids, et/ou la masse pâteuse fournie a une teneur en eau inférieure à 4 % en poids, de préférence < 2 % en poids, et/ou **en ce que** l'huile et/ou la graisse est ajoutée au noix et/ou aux graines pour obtenir la masse pâteuse ou à la masse pâteuse fournie en un amont résultant à une teneur en eau de < 2 % en poids.

12. Procédé selon l'une quelconque des revendications précédentes,
**caractérisé en ce que**
la masse pâteuse fournie se compose seulement et/ou est obtenue seulement à partir de noix et/ou de graines, de préférence seulement de graines, de préférence particulière seulement d'amandes de préférence blanchies.

13. Produit alimentaire semblable au fromage frais, obtenu de préférence par un procédé selon l'une quelconque des revendications précédentes, contenant des noix et/ou des graines broyées, de préférence des amandes, le produit alimentaire semblable au fromage frais ayant, dans un état non désintégré, une distribution granulométrique **caractérisée par** une distribution granulométrique, mesurée dans l'eau distillée utilisant un spectromètre de diffraction laser, qui a un diamètre de particule moyen de x50,3 < 100 µm, de préférence entre 10 et 40 µm, ainsi que par au moins un pic, notamment un maximum global, à un diamètre de particule de x3 > 10 µm, et le produit alimentaire ayant, dans un état partiellement désintégré obtenu en mélangeant une partie en poids du produit alimentaire avec neuf parties en poids d'une solution SDS-EDTA (0,25 % SDS; 0,25 % EDTA), une distribution granulométrique, mesurée dans l'eau distillée utilisant un spectromètre de diffraction laser, qui a au moins un pic additionnel à une diamètre de particule de x3 < 10 µm par comparaison à l'état non désintégré,
**caractérisé en ce que**
le produit alimentaire a une solidité dans une plage de valeurs entre 0,2 N et 7,0 N, la solidité étant mesurée à 10 °C utilisant une machine d'essai de texture dans laquelle un poinçon de pressage rond ayant une surface de 1,27 cm² pénètre dans un échantillon à une vitesse de 2 mm/s, et **en ce que** la teneur totale en eau du produit alimentaire fini est entre 50 % en poids et 82 % en poids, et **en ce que** le produit alimentaire contient entre 5 % en poids et 50 % en poids d'une masse pâteuse ayant une teneur en noix et/ou en graines d'au moins 70 % en poids.

14. Produit alimentaire selon la revendication 13,
**caractérisé en ce que**
la propriété de texture rugueuse-freinant du produit alimentaire, déterminé par un panel descriptif d'analyse sensorielle selon DIN 10967 utilisant un fromage blanc maigre contenant 20 % en poids de graisse dans la masse sèche comme produit de référence, est supérieure à 2,5 et/ou a une valeur dans une plage de valeurs entre 3 et 7,5.

15. Produit alimentaire selon l'une quelconque des revendications 13 ou 14,
**caractérisé en ce que**
le produit alimentaire a une solidité dans une plage de valeurs entre 0,5 N et 2,5 N, mesurée à 10 °C.

16. Produit alimentaire selon l'une quelconque des revendications 13 à 15,
**caractérisé en ce qu'**
au moins 90 % en poids, de préférence au moins 98 % en poids, de la proportion d'huile et/ou de graisse du produit alimentaire sont incorporés dans des particules de microgel sur la base de noix et/ou de graines.

17. Produit alimentaire selon l'une quelconque des revendications 13 à 16,
**caractérisé en ce que**
la distribution granulométrique du produit alimentaire dans l'état non désintégré a un diamètre de particule x10,3 dans une plage de valeurs entre 5 et 15 µm et/ou un diamètre de particule x90,3 dans une plage de valeurs entre 20 et 75 µm.

18. Produit alimentaire selon l'une quelconque des revendications 13 à 17,
**caractérisé en ce que**
le pH est dans une plage de valeurs entre 4,0 et 5,4, de préférence entre 4,6 et 5,0.

19. Produit alimentaire selon l'une quelconque des revendications 13 à 18,
**caractérisé en ce que**
la teneur en eau est entre 60 et 72 % en poids et/ou **en ce que** la teneur en graisse dans la masse sèche est entre 30 et 80 % en poids, de préférence entre 50 et 75 % en poids, et/ou **en ce que** la teneur en NaCl est entre 0,05 et 4 % en poids, de préférence entre 0,1 et 2 % en poids.

20. Produit alimentaire selon l'une quelconque des revendications 13 à 19,
**caractérisé en ce que**
la couleur du produit alimentaire dans l'espace de couleur CIELAB avec les coordonnées de base cartésiennes L*, a*, b* selon EN ISO 11664-4:2011 est définie par L* ≥ 78 et/ou a* entre -3 et +1 et/ou b* entre -1 et +9.

21. Utilisation d'un produit alimentaire selon l'une quelconque des revendications 13 à 20 comme aliment pur ou comme ingrédient d'une recette, notamment comme remplissage ou additif dans un aliment, notamment dans un aliment fabriqué industriellement.
